Europäisches Patentamt

European Patent Office

Office européen des brevets

(19)

(11) **EP 0 912 964 B1**

(12) **FASCICULE DE BREVET EUROPEEN**

(45) Date de publication et mention
de la délivrance du brevet:
**31.10.2001 Bulletin 2001/44**

(21) Numéro de dépôt: **97934605.3**

(22) Date de dépôt: **22.07.1997**

(51) Int Cl.⁷: **G06T 7/20**

(86) Numéro de dépôt international:
**PCT/FR97/01354**

(87) Numéro de publication internationale:
**WO 98/05002 (05.02.1998 Gazette 1998/05)**

(54) **PROCEDE ET DISPOSITIF FONCTIONNANT EN TEMPS REEL, POUR LE REPERAGE ET LA LOCALISATION D'UNE ZONE EN MOUVEMENT RELATIF DANS UNE SCENE, AINSI QUE POUR LA DETERMINATION DE LA VITESSE ET DE LA DIRECTION DU DEPLACEMENT**

**VERFAHREN UND GERÄT ZUM LOKALISIEREN EINER SICH BEWEGENDEN ZONE UND BESTIMMUNG DER SCHNELLHEIT UND RICHTUNG DER BEWEGUNG EINES GEBIETES VON RELATIVER BEWEGUNG IN EINER SZENE**

**METHOD AND DEVICE FOR REAL-TIME DETECTION, LOCATION AND DETERMINATION OF THE SPEED AND DIRECTION OF MOVEMENT OF AN AREA OF RELATIVE MOVEMENT IN A SCENE**

(84) Etats contractants désignés:
**AT BE CH DE DK ES FI FR GB IT LI NL PT SE**

(30) Priorité: **26.07.1996 FR 9609420**

(43) Date de publication de la demande:
**06.05.1999 Bulletin 1999/18**

(73) Titulaire: **Holding B.E.V. S.A.**
**2953 Luxembourg (LU)**

(72) Inventeur: **PIRIM, Patrick**
**F-75013 Paris (FR)**

(74) Mandataire: **Phélip, Bruno et al**
**c/o Cabinet Harlé & Phélip**
**7, rue de Madrid**
**75008 Paris (FR)**

(56) Documents cités:
**US-A- 5 488 430**

• **TOMITA A ET AL: "HAND SHAPE EXTRACTION FROM A SEQUENCE OF DIGITIZED GRAY-SCALE IMAGES" PROCEEDINGS OF THE INTERNATIONAL CONFERENCE ON INDUSTRIAL ELECTRONI CONTROL AND INSTRUMENTATION. (IECON), BOLOGNA, SEPT. 5 - 9, 1994 SPECIAL SESSIONS, SIGNAL PROCESSING AND CONTROL, vol. 3 OF 3, 5 septembre 1994, INSTITUTE OF ELECTRICAL AND ELECTRONICS ENGINEERS, pages 1925-1930, XP000526830**

**Description**

La présente invention a pour objet un procédé et un dispositif permettant de repérer et de localiser une zone en mouvement relatif dans une scène et de déterminer la vitesse et la direction orientée de ce mouvement relatif, et ceci en temps réel.

Par mouvement relatif, on entend aussi bien le mouvement de ladite zone (qui peut être constituée par un «objet», au sens le plus large incluant un être vivant ou une portion d'un être vivant, une main par exemple) dans un environnement sensiblement immobile, que l'immobilité plus ou moins complète de ladite zone (ou «objet») dans un environnement en déplacement au moins partiel.

L'invention est relative au traitement d'un signal vidéo numérique en provenance d'un système d'observation, constitué par un système optique d'entrée ou objectif, apte à former une image de la scène observée, et par un système de conversion optoélectronique ou capteur, apte à convertir ladite image qu'il reçoit en un signal numérique de sortie.

En général le système d'observation est constitué par une caméra vidéo ou caméscope, qui observe la scène à surveiller (ledit signal de sortie numérique étant alors constitué par le signal vidéo numérique débité par une caméra à sortie numérique ou par la sortie d'un convertisseur analogique/numérique dont l'entrée est connectée à la sortie d'une caméra débitant un signal vidéo analogique).

Le système d'observation pourrait également être constitué par l'objectif d'un instrument d'optique (jumelles, lunette d'observation, viseur), dont on prélève au moins une portion du faisceau lumineux sortant, et par un capteur photo-électronique, de type CCD ou CMOS par exemple, avec l'électronique associée habituelle, capteur recevant l'image formée par ladite portion de faisceau lumineux et le convertissant, par l'électronique associée, en un signal vidéo numérique de sortie.

L'invention consiste essentiellement à traiter le signal vidéo numérique de sortie d'un système d'observation, notamment d'une caméra vidéo, à sortie numérique pour en déduire des signaux signalant l'existence et la localisation d'une zone en déplacement relatif dans ladite scène, ainsi que la vitesse et la direction orientée du déplacement dans le cas où ladite zone se déplace effectivement dans ladite scène relativement à un environnement sensiblement immobile, et ceci en temps réel.

Le système le plus perfectionné pour repérer et localiser un objet en mouvement relatif et déterminer sa vitesse et sa direction orientée de déplacement est le système de la vision animale ou humaine, par exemple d'un chasseur à l'affût localisant le déplacement d'un animal, ainsi que la direction et la vitesse de ce déplacement.

Dans la technique antérieure on a proposé des dispositifs de surveillance du type rétine artificielle, soit analogiques (Giocomo Indiveri et al. in Proceedings of MicroNeuro'96 p. 15 à 22), soit numériques (Pierre-François Rüedi in Proceedings of MicroNeuro'96 p. 23 à 29), mais il s'agit dans le premier article de détecteurs et unités analogiques à structure complexe et dans le second article de moyens de repérage des bords d'un objet ; en outre dans les dispositifs décrits on a recours à des mémoires très rapides et de grande capacité pour pouvoir opérer en temps réel, et on obtient des renseignements limités en ce qui concerne les zones ou objets en mouvement.

On a ainsi proposé de mémoriser, dans une première mémoire bi-dimensionnelle, le signal d'une trame en provenance d'une caméra vidéo, ou analogue, constitué par une suite de données concernant les pixels représentatifs de la scène observée par la caméra à un instant $t_0$, puis, dans une deuxième mémoire bi-dimensionnelle, le signal vidéo, pour la trame correspondante suivante, représentatif de ladite scène à un instant $t_1$. Si un objet s'est déplacé entre $t_0$ et $t_1$, on détermine, d'une part, la distance $d$ parcourue par celui-ci dans la scène entre $t_1$ et $t_0$ et, d'autre part, la durée T = $t_1$ - $t_0$ entre les débuts de deux trames correspondantes successives relatives aux mêmes pixels. La vitesse du déplacement est alors égale à $d$/T. Un tel système nécessite une capacité totale de mémoire très importante si on désire obtenir des indications précises de vitesse et de direction orientée caractérisant le déplacement. En outre, un certain retard existe en ce qui concerne l'obtention des indications de vitesse et de direction du déplacement ; en effet de telles informations ne sont disponibles qu'à l'instant $t_1$ + R, en appelant R la durée des calculs portant sur l'intervalle $t_0$ - $t_1$. Ce double inconvénient (nécessité d'une grande capacité de mémoire et retard à l'obtention des informations désirées) limite les applications d'un tel système.

Par ailleurs le brevet français No 2.611.063, dont l'un des inventeurs (Monsieur Patrick Pirim) est l'inventeur de la présente invention, décrit un procédé et un dispositif de traitement en temps réel d'un flot de données séquencé, constitué en particulier par le signal de sortie d'un caméscope, afin de réaliser une compression des données. Selon ce brevet antérieur, on forme l'histogramme des niveaux du signal suivant une loi de classification pour une première séquence, on mémorise la fonction de Gauss représentative associée à cet histogramme, dont on extrait les niveaux maximum et minimum, on compare les niveaux de la séquence ultérieure, ou deuxième séquence, aux dits niveaux du signal pour la première séquence, mémorisé avec une constante de temps constante, identique pour chaque pixel, on engendre un signal binaire de classification qui caractérise ladite séquence suivante par rapport à la loi de classification, on engendre, à partir de ce signal binaire, un signal auxiliaire représentatif de la durée et de la position d'une plage de valeurs significatives et enfin on engendre, à partir dudit signal auxiliaire, un signal de localisation de la plage ayant la plus longue durée, dite plage dominante; et on répète ces opérations pour les séquences suivantes du signal séquencé. Ce procédé et ce dispositif de classification permettent une compression des données en ne retenant que les paramètres intéressants du flot traité de données séquencé. En particulier ce procédé permet de traiter un signal vidéo numérique représentatif d'une image vidéo en vue d'extraire et localiser au moins une caractéristique d'au moins une zone de ladite image. On peut ainsi classer les niveaux de luminance et/ou de chrominance du signal et caractériser et localiser un objet dans l'image.

Quant au brevet des Etats-Unis n° 5 488 430, il réalise la détection et l'estimation d'un déplacement en déterminant séparément les changements horizontaux et verticaux de l'image de la zone observée. On y utilise des signaux de différence pour détecter des déplacements de la droite vers la gauche, ou inversement et du haut vers le bas, ou inversement, dans les directions horizontale et verticale respectivement, en effectuant la fonction logique OU EXCLUSIF sur des signaux de différence horizontaux/verticaux et des signaux de différence de trames, d'une part, et en utilisant un rapport des sommes de signaux horizontaux/verticaux et des sommes des signaux de différence de trames par rapport à une fenêtre K x 3, d'autre part. Dans ce brevet U.S. 5 488 430 on utilise les valeurs calculées de l'image suivant les deux directions orthogonales horizontale et verticale avec un écart répétitif identique K dans ces deux directions orthogonales, cet écart K étant défini en fonction des vitesses de déplacement qu'on cherche à déterminer. Le dispositif selon ce brevet U.S. détermine la direction des mouvements suivant chacune des deux directions orthogonales en appliquant aux signaux de différence un ensemble d'opérations de calcul indiquées aux colonnes 12 (en début et en fin) et 13 (en début) qui nécessite des opérateurs électroniques, notamment de division, de multiplication et de sommation, fort complexes (donc difficiles à réaliser) ; des opérateurs complexes supplémentaires sont en outre nécessaires pour obtenir, à partir des projections sur les deux axes horizontal et vertical, la vitesse et la direction orientée du déplacement (extraction de racine carrée pour obtenir l'amplitude de la vitesse et calcul de la fonction arctg pour obtenir la direction orientée). On ne prévoit pas, enfin, dans le brevet 5 488 430 la mise en oeuvre d'un lissage des valeurs de pixel au moyen d'une constante de temps, variable pour chaque pixel, afin de compenser les variations trop rapides de ces valeurs.

Au contraire, la mise en oeuvre du procédé selon l'invention est réalisée au moyen d'un dispositif, faisant l'objet de l'invention, qui est de type numérique, avec une structure relativement simple et une mémoire de capacité relativement réduite, et permet l'obtention rapide des informations désirées, avec des résultats et des applications très variées (qui correspondent suivant l'application à une demi-image complète dans le cas de trames entrelacées ou à une image complète).

Un article par Alberto Tomita Sr. et Rokuya Ishii, intitulé «Hand Shape Extraction from a Sequence of Digitized Gray-Scale Images», dans Institute of Electrical and Electronics Engineers, vol. 3, 1994, p. 1925-1930, met en oeuvre une détection de mouvement par soustraction entre images successives, suivie de la formation d'histogrammes basée sur la forme de la main humaine, afin d'extraire la forme d'une main humaine dans une scène numérisée. L'analyse par histogramme est basée sur une échelle de gris inhérente à la main humaine. On ne prévoit aucune formation d'histogrammes de coordonnées du plan. Le but unique des auteurs de cet article est de détecter les déplacements d'une main humaine, par exemple afin de remplacer, pour l'introduction de données dans un ordinateur, la souris habituelle par une main dont on repère les déplacements.

Au contraire la présente invention n'est pas limitée à détecter le déplacement d'une main, mais permet de détecter le déplacement relatif de tout objet, au sens le plus large, dans une scène et n'utilise pas des histogrammes basés sur les valeurs de gris d'une main, mais des histogrammes de certaines variables numériques particulières représentatives du déplacement éventuel et des histogrammes de coordonnées du plan.

Selon la présente invention :

- on traite un signal vidéo numérique, en provenance d'un système d'observation, signal constitué, à la manière connue, par une succession de trames (qui correspondent à une demi-image dans le cas de deux trames entrelacées par image ou à une image complète dans le cas d'une seule trame par image) comportant chacune un nombre déterminé de lignes successives et, dans chacune de ces lignes, un nombre déterminé de pixels ou points d'image,

- afin d'obtenir, en utilisant une mémoire de capacité relativement faible, des signaux aptes à indiquer s'il existe, dans la scène observée, une zone en déplacement relatif et, dans ce cas, à préciser la localisation, ainsi que la vitesse et la direction (orientée) de ladite zone si elle se déplace effectivement par rapport à son environnement,

- et ceci en élaborant deux signaux numériques caractéristiques, l'un, d'une variation ou non-variation significative du signal de pixel pour le même emplacement de pixel entre deux trames correspondantes successives et, l'autre, de l'amplitude de cette variation, lorsqu'elle existe, et en répartissant matriciellement ces deux signaux pour les pixels d'une portion de trame à un même instant.

L'invention a tout d'abord pour objet un procédé, en temps réel, pour le repérage et la localisation d'une zone en mouvement relatif dans une scène observée par un système d'observation à sortie constituée par un signal vidéo numérique du type comportant une succession de trames correspondantes, composées chacune d'une succession de lignes, composées chacune d'une succession de pixels, ainsi que pour la détermination de la vitesse et de la direction orientée du déplacement, ledit procédé étant caractérisé en ce qu'il consiste à effectuer sur le signal vidéo numérique de sortie successivement :

- un traitement de lissage dudit signal vidéo numérique de sortie mettant en oeuvre une constante de temps numérique dont la valeur numérique peut être modifiée pour chacun des pixels dudit signal de sortie, indépendamment pour chacun d'entre eux ;

- une mise en mémoire d'une trame dudit signal de sortie après le lissage, d'une part, et de la constante de temps de lissage associée à la dite trame, d'autre part ;

- un traitement temporel consistant, pour chaque position de pixel, à déterminer l'existence, d'une part, et l'amplitude, d'autre part, d'une variation significative de l'amplitude du signal de pixel entre la trame actuelle et la trame juste antérieure lissée, mise en mémoire, et à générer deux signaux numériques, le premier signal étant un signal binaire ou monobit à deux valeurs possibles dont l'une représente l'existence d'une telle variation significative et l'autre l'absence d'une telle variation entre deux trames successives, la valeur dudit signal binaire modifiant la valeur mémorisée de ladite constante de temps afin de la diminuer si ledit signal représente une variation significative et afin de l'augmenter si ce signal ne représente pas une telle variation, la diminution ou l'augmentation étant réalisée d'une manière quantifiée, tandis que le second signal numérique, dit d'amplitude, est un signal multibits à nombre limité de bits, quantifiant l'amplitude de cette variation ; et

- un traitement spatial consistant, pour chaque trame de signal vidéo numérique d'entrée,

    • à répartir, afin de caractériser les valeurs des pixels, en une matrice à nombre de lignes et nombre de colonnes réduits, par rapport respectivement au nombre de lignes et au nombre de pixels par ligne dans le signal vidéo, uniquement les valeurs, au même instant d'observation, pour une fraction des pixels d'une trame - fraction qui défile par balayage à travers ladite matrice pendant la durée d'une trame - dudit signal binaire, d'une part, et dudit signal numérique d'amplitude, d'autre part,

    • à déterminer, dans cette double représentation matricielle instantanée, une zone particularisée, dans laquelle à la fois ledit signal binaire a la valeur recherchée représentant la présence, ou respectivement l'absence, de variation significative et ledit signal numérique d'amplitude varie, ou respectivement ne varie pas, d'une valeur significative entre pixels voisins dans la matrice suivant une direction orientée à partir d'un pixel d'origine, et ceci pour une même portion de trame, donc à un même instant d'observation, et

    • à engendrer des signaux représentatifs de l'existence et de la localisation de la zone en déplacement relatif, ainsi que la vitesse relative intertrames et la direction orientée de ce déplacement, s'il existe, relativement à son environnement, à partir de la répartition matricielle instantanée de ces deux signaux numériques, binaire et d'amplitude.

De préférence, le procédé selon invention est caractérisé en ce qu'il consiste, en outre,

    • à former les histogrammes des valeurs des signaux répartis matriciellement, d'une part, et les histogrammes des inclinaisons de deux axes, à pente variable, de coordonnées dans un plan, d'autre part,

    • à repérer, dans chaque histogramme formé, un domaine de variation significative de la valeur traitée et

    • à déduire, de chaque domaine repéré, l'existence et la localisation, ainsi que la vitesse et la direction orientée, d'une zone en mouvement relatif.

Dans des modes de réalisation particuliers :

- ladite matrice est une matrice carrée à même nombre impair $(2l + 1)$ de lignes et de colonnes, et on considère les matrices emboîtées de 3 x 3, 5 x 5, 7 x 7,... $(2l + 1)$ x $(2l + 1)$ éléments centrées sur le centre de cette matrice carrée afin de déterminer la matrice emboîtée de plus petite taille dans laquelle ledit signal numérique varie dans une direction orientée à partir dudit centre, la valeur dudit signal binaire représentant un dépassement du seuil selon cette direction,

- ladite matrice est une matrice hexagonale et on considère les matrices hexagonales emboîtées de taille croissante centrées sur le centre de cette matrice hexagonale afin de déterminer la matrice emboîtée de plus petite taille dans laquelle ledit signal numérique varie dans une direction orientée,

- ladite matrice est une matrice en L renversé à une seule ligne et une seule colonne et on considère les matrices emboîtées de 3 x 3 pixels, 5 x 5 pixels, 7 x 7 pixels... $(2l + 1)$ x $(2l + 1)$ pixels, pour la ligne et la colonne uniques, afin de déterminer la matrice de plus petite taille dans laquelle le signal varie dans une direction orientée, à savoir la ligne de plus grande pente à quantification constante.

Avantageusement ladite constante de temps est de la forme $2^p$, $p$ étant un nombre inférieur à 16, pouvant donc être exprimé par pas plus de 4 bits, la diminution ou l'augmentation de la constante de temps étant réalisée par la soustraction ou l'addition d'une unité à *p*.

Dans ce cas, si on le désire, on considère des portions successives décroissantes de trames complètes suivant l'algorithme temps - échelle de Mallat et sélectionne la plus grande de ces portions, qui donne des indications de déplacement, vitesse et orientation, compatible avec la valeur de *p*.

L'invention a également pour objet un dispositif, fonctionnant en temps réel, pour le repérage et la localisation d'une zone en mouvement relatif dans une scène observée par un système d'observation à sortie constituée par un signal vidéo numérique, du type comportant une succession de trames correspondantes, des lignes successives dans chaque trame correspondante et des pixels successifs dans chaque ligne, ainsi que pour la détermination de la vitesse et de la direction orientée du déplacement, par mise en oeuvre du procédé susmentionné, ledit dispositif recevant, en entrée, ledit signal vidéo de sortie et étant caractérisé en ce qu'il comporte en combinaison :

- des moyens de lissage dudit signal vidéo numérique de sortie mettant en oeuvre une constante de temps numérique dont la valeur numérique peut être modifiée pour chacun des pixels dudit signal de sortie, indépendamment pour chacun d'entre eux ;
- des moyens de mémorisation d'une trame dudit signal de sortie après lissage, d'une part, et de la constante de temps de lissage associée à ladite trame, d'autre part ;
- une unité de traitement temporel pour analyser les variations temporelles de l'amplitude du signal de pixel, pour une même position de pixel, entre la trame actuelle et la trame juste antérieure lissée, mise en mémoire, dudit signal vidéo numérique, ladite unité comportant, en association avec une mémoire apte à recevoir, stocker et restituer des informations relatives à la trame correspondante précédente lissée, des moyens de comparaison pour déterminer, pour chaque position de pixel dans la trame du signal vidéo entrant, si la valeur absolue de la différence entre le signal de pixel actuel et une valeur représentative du signal de pixel, pour la même position de pixel, dans la trame antérieure, valeur représentative stockée dans ladite mémoire, dépasse ou non un seuil, en générant un signal binaire ou monobit à deux valeurs, dont l'une représente l'existence d'un dépassement et dont l'autre représente l'absence d'un dépassement, et des moyens de calcul aptes à déterminer un signal numérique d'amplitude multibits, à nombre réduit de bits, dont la valeur est fonction de l'amplitude de la variation de la valeur du même pixel entre la trame actuelle et la trame juste antérieure lissée, mise en mémoire, du signal vidéo numérique ; et
- un ensemble de traitement spatial, dont les entrées reçoivent, de l'unité de traitement temporel, lesdits signaux binaire et numérique d'amplitude successifs pour les pixels d'une même trame, ladite unité comportant des moyens aptes à caractériser les valeurs d'amplitude des pixels, ces moyens répartissant, suivant une matrice à nombre de lignes et nombre de colonnes réduits par rapport respectivement au nombre de lignes et au nombre de pixels par ligne dans une trame dudit signal vidéo numérique, uniquement lesdits signaux binaire et numérique d'amplitude relatif à un même instant, c'est-à-dire à une même trame, celle-ci défilant par balayage à travers ladite matrice pendant la durée d'une trame, des moyens de repérage pour déterminer, dans ladite matrice, une zone de pixels dans laquelle, à cet instant, le signal binaire a la valeur recherchée et des moyens pour déterminer, dans ladite matrice, une zone de pixels dans laquelle, à ce même instant, le signal numérique d'amplitude varie d'une quantité significative entre pixels voisins, et des moyens qui, en réponse aux indications des deux derniers moyens précédents, génèrent des signaux représentatifs de cette zone de pixels, donc de l'existence et de la localisation d'une zone en mouvement relatif dans la scène observée, ainsi que de la vitesse relative intertrames et de la direction orientée de cette zone lorsqu'elle se déplace effectivement relativement à son environnement.

De préférence l'unité de traitement spatial comporte, en outre, une sortie débitant un signal vidéo numérique retardé constitué par le signal vidéo numérique d'entrée retardé d'une durée égale à la durée des lignes d'une matrice diminuée de la durée d'une ligne afin de fournir un signal de sortie contemporain de l'analyse de la matrice dans ladite unité de traitement temporel.

De préférence, dans le dispositif selon l'invention, l'ensemble de traitement spatial comporte des moyens de retard en cascade dont chacun impose un retard égal à l'écart temporel entre les débuts de deux lignes successives et des moyens à retard en cascade pour chaque ligne imposant chacun un retard égal à l'écart temporel entre deux pixels successifs d'une ligne, les sorties de l'ensemble de tous les registres et de l'entrée des premiers registres de chaque ligne débitant à un instant donné les valeurs dudit signal binaire et dudit signal numérique d'amplitude, à un même instant, vers lesdits moyens de repérage.

Avantageusement le dispositif selon l'invention comporte également des moyens formant les histogrammes des valeurs de sortie de ladite unité de traitement spatial, ainsi que les histogrammes des inclinaisons de deux axes, à pente variable, de coordonnées dans un plan, des moyens pour repérer, dans chaque histogramme, un domaine de variation significative de la valeur traitée, afin de valider ce domaine en leur sortie et de déduire, pour l'ensemble des histogrammes, des signaux de sortie qui signalent et localisent une zone de la scène observée en mouvement relatif, si elle existe, ainsi que la vitesse et la direction orientée de ce mouvement si ladite zone se déplace effectivement par rapport à son environnement.

Si on désire détecter le mouvement d'un objet dans un environnement sensiblement immobile, on détermine la zone de la matrice dans laquelle simultanément le signal binaire a la valeur correspondant à un dépassement du seuil et le signal numérique d'amplitude varie d'une valeur significative entre pixels voisins d'une trame.

Au contraire, si on désire détecter l'immobilité d'un objet dans un environnement sensiblement en mouvement, on détermine la zone de la matrice dans laquelle simultanément le signal binaire a la valeur correspondant à un non-dépassement du seuil et le signal numérique d'amplitude ne varie pas entre pixels voisins d'une trame.

De préférence, dans le dispositif pour le repérage, la localisation et la détermination de la vitesse et de la direction orientée du déplacement d'une zone en mouvement relatif dans une scène, par mise en oeuvre du procédé susmentionné :

- lesdits moyens de lissage comportent une entrée qui reçoit ledit signal vidéo numérique et calculent, pour les pixels successifs d'une trame de ce signal vidéo, un signal lissé, dans lequel les variations temporelles du signal vidéo numérique d'entrée sont diminuées, par mise en oeuvre d'un signal de seuil reçu sur une autre entrée et d'une constante de temps relative à chaque position de pixel d'une trame, dont la valeur est successivement modifiée afin que le lissage conserve, tout en la réduisant, la tendance de variation du signal vidéo numérique entrant, ces moyens de lissage coopérant avec l'unité de mémoire qui reçoit, stocke et restitue les valeurs actualisées, pour chaque portion de pixel d'une trame, du signal lissé et de ladite constante de temps et débitent, sur leurs sorties, au moins la succession, pour chaque position de pixel, des valeurs de la constante de temps actualisée et des valeurs d'un signal binaire de dépassement ou non-dépassement dudit seuil par la valeur absolue de la différence entre la valeur du pixel et sa valeur lissée ; ladite unité de traitement spatial réalisant la répartition matricielle, par lignes et colonnes en nombre réduit, des sorties desdits moyens de lissage, à savoir des valeurs successives de la constante de temps et dudit signal binaire ;

- on prévoit des moyens de repérage pour repérer, dans ladite répartition matricielle, une zone de pixels dans laquelle, à la fois, soit la valeur dudit signal binaire correspond à un dépassement de seuil et ladite constante de temps varie entre pixels voisins d'une valeur significative dans une direction, et pour produire des signaux de sortie indiquant la localisation de ladite zone et la vitesse et la direction orientée du déplacement dans ladite zone, soit la valeur dudit signal binaire correspond à un non-dépassement du seuil et ladite constante de temps ne varie pas entre pixels voisins et pour produire des signaux de sortie indiquant la localisation de ladite zone.

Dans les modes de réalisation préférés :

- lesdits moyens de lissage comprennent, en combinaison avec une mémoire vidéo ou mémoire de trame (field memory) qui stocke les valeurs successives, pour chaque pixel de trame, de ladite constante de temps et du signal vidéo numérique lissé, des moyens de calcul, pour chaque pixel, de la valeur absolue de la différence entre la valeur du signal vidéo numérique provenant de la caméra et la valeur du signal vidéo numérique précédent lissé, des moyens pour comparer cette différence à un seuil et pour engendrer un signal binaire, dont une des deux valeurs indique un dépassement dudit seuil et l'autre valeur indique un non-dépassement de celui-ci ; des moyens de mise à jour de la constante de temps recevant de ladite mémoire la valeur juste antérieure de la constante de temps et la diminuant si elle reçoit un signal binaire dont la valeur indique un dépassement de seuil, mais l'augmentant si la valeur du signal binaire indique un non-dépassement, la diminution ou l'augmentation n'ayant toutefois pas lieu si elle aboutissait respectivement à une valeur négative ou à une valeur supérieure à une valeur seuil, et des moyens de mise à jour de la valeur lissée du signal vidéo numérique qui ajoutent algébriquement à la valeur antérieure de ce signal lissé reçue de ladite mémoire le quotient de la différence entre le signal vidéo numérique en provenance de la camera et le signal vidéo numérique lissé précédent en provenance de ladite mémoire par un facteur égal à la valeur de la constante de temps antérieure en provenance de ladite mémoire ;

- ladite constante de temps est sous la forme $2^p$, $p$ étant un nombre entier inférieur à 16, pouvant donc être représenté par au plus 4 bits, la diminution ou l'augmentation de la constante de temps étant réalisée par la soustraction ou l'addition d'une unité à $p$ ;

- lesdits moyens de répartition matricielle comprennent, en combinaison avec des moyens de retard appliquant des retards successifs, égaux à la durée d'une ligne du signal vidéo, au signal vidéo numérique en provenance de la caméra pour débiter sur une succession des sorties, ce signal vidéo retardé de la durée d'un retard, de deux retards et ainsi de suite jusqu'à un nombre de retards égal au nombre de lignes de la matrice de répartition spatiale diminué d'une unité, des moyens de répartition matricielle suivant les lignes successives de la matrice recevant, d'une part, le signal vidéo numérique de la caméra non retardé et ce signal progressivement retardé en provenance des sorties des moyens de retard et, d'autre part, les valeurs de la constante de temps et dudit signal binaire en provenance desdits moyens de lissage, pour réaliser une répartition matricielle, par lignes et par colonnes, à un instant donné desdites valeurs de la constante de temps et du signal binaire pour les pixels d'une portion de trame du signal vidéo numérique de dimension égale à celle de la matrice ;

- les moyens de répartition matricielle comportent une succession de conducteurs de signaux numériques en nombre égal à celui des lignes de la matrice de répartition, chacun avec des registres à décalage, connectés en série, imposant chacun un retard égal à l'écart temporel entre deux pixels successifs d'une ligne du signal vidéo numérique, la position d'un pixel réparti dans la matrice étant déterminé par un point de la matrice situé en amont d'un registre à retard, dont le nombre par ligne est égal au nombre de colonnes dans la matrice diminué d'une unité, et par un point en aval du registre à décalage le plus en aval ;

- lesdits moyens de repérage, dans ladite matrice, d'une zone en déplacement, par détection de la présence simultanée d'une valeur du signal binaire indiquant un dépassement et de la variation de la valeur de la constante de temps, comprennent des moyens pour déterminer, suivant des directions orientées discrètes numérisées, la pente de la variation de la valeur de la constante de temps au voisinage d'un pixel au centre de ladite matrice, constituant l'origine pour lesdites directions, et des moyens pour sélectionner la pente la plus forte de variation au voisinage de ce centre-origine et en déterminer la direction orientée, en tenant compte d'un critère de choix pour la sélection de la direction en cas de plus d'une direction de même pente maximale de variation, ces derniers moyens débitant, en sortie, des signaux représentatifs de la vitesse et de la direction orientée du déplacement dans la zone en déplacement, avec un signal de validation indiquant que ces signaux de vitesse et de direction sont validés, ainsi que de la valeur de la constante de temps.

De préférence dans le cas où le dispositif selon l'invention les comporte, les moyens formant les histogrammes comprennent chacun :

- des entrées recevant le signal dont on forme l'histogramme et un signal de validation en provenance des moyens de répartition matricielle ; et
- des moyens pour établir deux histogrammes unidimensionnels linéaires pour les deux coordonnées du plan et pour combiner ces deux histogrammes linéaires en un histogramme de surface représentant la zone de variation significative du signal d'entrée ; et
- une sortie débitant un signal représentatif de cette zone.

En outre les moyens formant les histogrammes comprennent de préférence :

- des moyens de calcul de changement de repère, dont les entrées reçoivent un signal de séquence de lignes, un signal de séquence de colonnes et un signal d'horloge de pixel et dont la sortie est représentative du changement de repère ;
- deux moyens de formation d'histogrammes pour deux axes, recevant les deux signaux de repère et formant les histogrammes de ces axes ; et
- des moyens de zone recevant les sorties des deux moyens de formation d'histogrammes pour les deux axes et débitant, en sortie, un signal d'information de pente globale des deux axes.

Dans certaines applications, on peut prévoir que ladite constante de temps est constituée par le numéro d'ordre des intervalles, en nombre limité, et en grandeur progressivement croissante, selon lesquels on découpe la valeur absolue de la différence entre la valeur de pixel actuel et la valeur juste antérieure du même pixel après lissage, pour chaque position de pixel.

Avantageusement pour déterminer le signal binaire de dépassement ou non-dépassement du seuil, on compare à un seuil, pour chaque position de pixel, la valeur absolue de la différence entre la valeur du pixel actuel qui entre et la valeur du même pixel lissée juste antérieure en provenance de la mémoire.

En ce qui concerne le signal numérique d'amplitude, on le génère, de préférence, sous la forme d'un nombre entier qui représente la tendance au rapprochement entre la valeur du pixel actuel et la valeur de ce même pixel juste antérieure lissée, pour chaque position de pixel.

Une des caractéristiques de l'invention est constituée par le fait que, pour déterminer tant le signal binaire que le signal numérique d'amplitude, on utilise, pour la valeur du pixel juste antérieure, une valeur lissée de celui-ci mise en mémoire, afin de réduire les variations temporelles excessives de ce signal de pixel qui peuvent exister dans le signal vidéo numérique d'entrée en provenance de la caméra vidéo ou autre dispositif d'observation à sortie numérique.

On sait en effet qu'une opération de lissage a pour effet de substituer progressivement, à un signal numérique à variations importantes d'amplitude dans le temps, un signal présentant des variations plus réduites et donc plus facilement quantifiables avec un nombre réduit de paliers, donc de bits, dans le signal numérique d'amplitude lissé.

On va décrire maintenant, avec référence au dessin annexé, un mode de réalisation préféré, donné à titre d'exemple illustratif, et nullement limitatif, d'un dispositif selon l'invention mettant en oeuvre le procédé selon l'invention.

Sur ce dessin :

La Fig. 1 illustre très schématiquement l'ensemble du système selon l'invention avec son entrée et ses sorties, ainsi que le signal d'entrée pour ce système.

La Fig. 2 représente, sous forme de blocs fonctionnels, les principales unités d'un dispositif selon l'invention formant un ensemble de traitement temporel et spatial.

La Fig. 3 et la Fig. 4 illustrent les schémas fonctionnels, respectivement de l'ensemble de traitement temporel par calcul et de l'ensemble de traitement spatial par répartition matricielle, qui font partie du dispositif de la Fig. 2.

La Fig. 5 schématise le traitement temporel et le traitement spatial dans un système selon l'invention.

La Fig. 6 illustre la valeur numérique, selon le code de Freeman, des directions discrètes à partir d'un centre d'origine dans la matrice de la Fig. 4.

La Fig. 7 illustre deux matrices emboîtées de petite taille à l'intérieur de la matrice de répartition temporelle.

Les Fig. 8 et 9 décrivent deux autres types de matrice, respectivement hexagonale et en L renversé.

La Fig. 10 illustre schématiquement l'assemblage, selon la ligne $Z - Z^1$ du dispositif de la Fig. 2 avec un ensemble supplémentaire selon une réalisation préférée de l'invention.

La Fig. 11 représente, sous forme de blocs, ledit ensemble supplémentaire de la Fig. 10; la Fig. 2 et la Fig. 11 étant assemblées le long de la ligne $Z - Z^1$, en traits mixtes, figurant sur la Fig. 2 et la Fig. 10.

La Fig. 12 illustre la formation de deux histogrammes unidimensionnels et, à partir de ceux-ci, d'un histogramme superficiel de zone en déplacement, pour un signal d'entrée.

La Fig. 13 représente plus en détail un bloc ou unité de formation et traitement d'histogramme et son bloc de combinaison linéaire associé.

La Fig. 14 illustre un histogramme unidimensionnel.

La Fig. 15 et la Fig. 16 illustrent l'utilisation de la variation de la pente d'observation d'une scène.

La Fig. 17, la Fig. 18 et la Fig. 19 illustrent, sous forme de blocs pour les deux premières figures, d'autres applications possibles d'un dispositif selon l'invention, la première figure concernant la vidéoconférence, la seconde étant relative à la surveillance des autoroutes (ou routes principales) et la troisième concernant la commande d'une machine par le mouvement de la main d'un opérateur.

Les Fig. 20 et 21 représentent schématiquement l'application de l'invention à la surveillance de l'endormissement d'un conducteur automobile.

La Fig. 22 montre l'image transformée suivant le diagramme de Mallat.

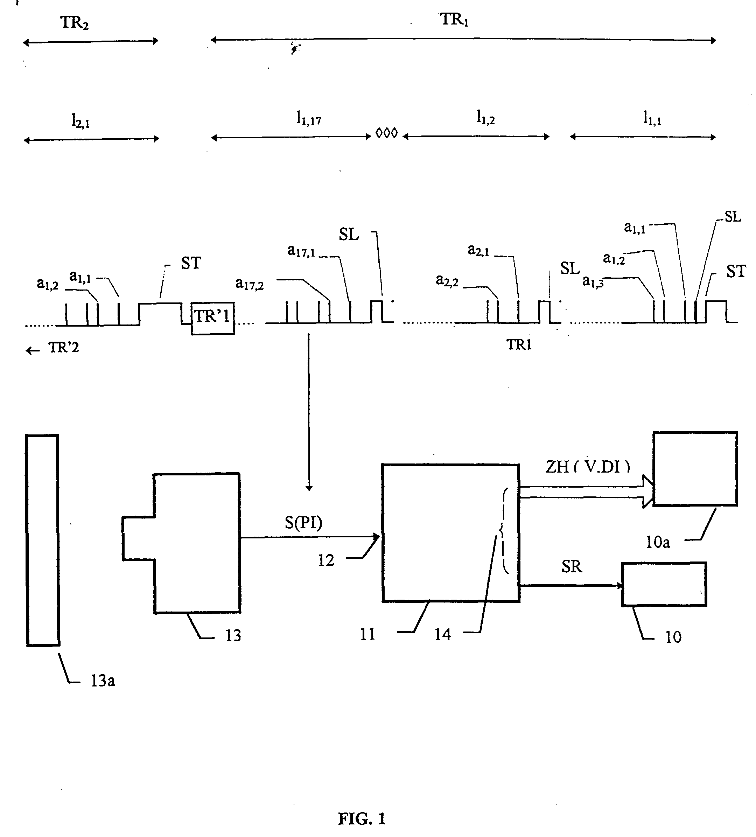

En référant d'abord à la Fig. 1, on voit que, dans le mode de réalisation préféré, le dispositif 11, selon l'invention, comporte d'abord une entrée 12 qui reçoit un signal vidéo numérique S d'une caméra vidéo ou caméscope 13, à un ou plusieurs capteurs CCD de type CMOS, avec sortie numérique directe ou à sortie analogique convertie, dans un convertisseur analogique/numérique, en sortie numérique. Ce signal S est constitué, à la manière connue, par une succession de paires de trames entrelacées telles que $TR_1$ et $TR'_1$, $TR_2$ et $TR'_2$, comportant chacune une succession de lignes de balayage horizontal, chaque ligne (telle que $l_{1,1}$, $l_{1,2}$, ... $l_{1,17}$... de $TR_1$ et $l_{2,1}$ de $TR_2$) étant constituée par une succession de signaux élémentaires de pixels ou points-images PI représentatifs de points (tels que : $a_{1,1}$, $a_{1,2}$, et $a_{1,3}$ pour la ligne $l_{1,1}$ ; $a_{2,1}$, $a_{2,2}$ pour la ligne $l_{1,2}$ ; $a_{17,1}$ et $a_{17,2}$ pour la ligne $l_{1,17}$ ; $a_{1,1}$ , $a_{1,2}$ pour la ligne $l_{2,1}$) de la scène 13a surveillée par la caméra 13 ; c'est pourquoi sur le dessin on a indiqué S(PI), à savoir un signal S constitué par des pixels PI.

A la manière connue, S(PI) comporte des signaux de synchronisation trame ST au début de chaque trame et de synchronisation ligne SL au début de chaque ligne.

On voit donc que le signal S(PI) est constitué

- par une succession de séquences (les trames successives) dans le cadre d'un domaine temporel et
- dans chaque séquence (dans chaque trame) par une série de sous-séquences (lignes, pixels) dans le cadre d'un domaine spatial.

Dans le domaine temporel, on désignera par l'expression «trames successives» les trames successives de même nature (c'est-à-dire les trames impaires, par exemple $TR_1$, ou respectivement paires, par exemple $TR'_1$) des paires de trames, par exemple $TR_1$ - $TR'_1$, formant les images successives du signal vidéo numérique S(PI) et par l'expression «pixels successifs dans la même position» les valeurs de pixel (PI) successives en un même emplacement des trames successives de même nature, par exemple $a_{1,1}$ de $l_{1,1}$ de la trame $TR_1$ et $a_{1,1}$ de $l_{2,1}$ de la trame correspondante suivante $TR_2$.

Le dispositif 11 comporte par ailleurs des sorties 14 débitant divers signaux numériques, élaborés par lui, utiles pour signaler l'existence d'une zone ou «objet» (au sens le plus général indiqué ci-dessus) en déplacement relatif et sa localisation, de même que sa vitesse et sa direction de déplacement si celui-ci est effectif par rapport à un environnement sensiblement immobile, à savoir le signal complexe ZH groupant schématiquement les signaux signalant d'existence et la localisation de cette zone ou objet, la vitesse V et de direction orientée DI du déplacement, et éventuellement le signal vidéo numérique d'entrée S retardé en synchronisme avec les signaux précédents, pour tenir compte de leur temps de calcul, ce signal retardé SR permettant de visionner, sur l'écran d'un moniteur ou d'un téléviseur 10, l'image perçue par la camera 13 au moment où sont disponibles les renseignements concernant la zone éventuelle en déplacement relatif, à savoir le signal ZH, (V, DI), utilisables dans un ensemble de traitement et contrôle 10a.

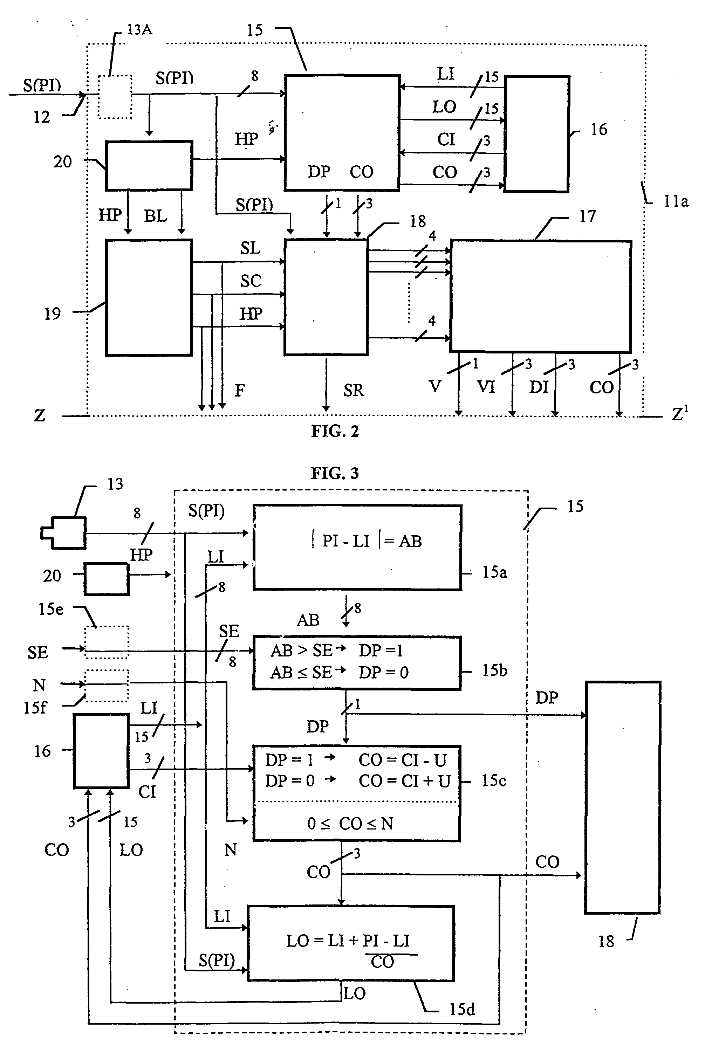

Avec référence à la Fig. 2, on va expliciter la structure de la première partie du dispositif 11 de la Fig. 1, cette première partie étant représentée à l'intérieur du cadre 11a en traits interrompus de cette Fig. 2.

L'ensemble 11a comprend essentiellement, d'une part, une unité de traitement temporel 15, avec une unité mémoire associée 16, et, d'autre part, une unité de traitement spatial 17, avec une unité à retards 18 et une unité de séquencement 19 associées, ainsi qu'une horloge de pixel 20 cadençant l'unité de traitement temporel 15 et l'unité de séquencement 19.

L'unité 15 de traitement temporel, qui réalise, entre autres, un lissage du signal vidéo :

- élabore, à partir du signal vidéo numérique S, provenant de la caméra vidéo 13 et comportant une succession de valeurs de pixel PI, et à partir des impulsions HP engendrés par l'horloge 20 (à partir de signal S) à la cadence des pixels dans une trame (en particulier 13,5 MHz), un certains nombre de grandeurs, comme exposé ci-après avec référence à la Fig. 3, et échange avec la mémoire 16 les valeurs de deux de ces grandeurs, à savoir les valeurs lissées L du signal vidéo numérique et les valeurs C de la constante de temps du lissage, les valeurs L et C étant suivies de la lettre O pour les valeurs entrant dans la mémoire 16 à partir de l'unité 15 ou de la lettre I pour les valeurs sortant de la mémoire 16 pour atteindre l'unité 15, et

- débite, en sortie, un signal binaire DP de dépassement ou non-dépassement de seuil et un signal numérique CO indiquant la valeur calculée actualisée de la constante de temps, à savoir la valeur CO envoyée dans la mémoire 16.

La structure par blocs de calcul et/ou comparaison de l'unité de traitement temporel 15 est explicitée sur la Fig. 3 ; l'unité 15 comporte quatre blocs 15a, 15b, 15c, 15d.

Le premier bloc 15a de l'unité 15, à partir

- du signal vidéo numérique d'entrée S, constitué formé par une succession de signaux de pixels PI, et
- d'une valeur lissée LI de ce signal S pour la trame correspondante juste antérieure, calculée auparavant par l'unité 15 en tant que LO et stockée temporairement dans la mémoire 16 (comme expliqué ci-après)
- à la cadence imposée par les signaux d'horloge HP de l'horloge 20, calcule la valeur absolue AB de la différence entre les valeurs entrantes de PI et LI pour une même position de pixel (par exemple $a_{1,1}$, de $l_{1,1}$ de $TR_1$ et de $l_{2,1}$ de $TR_2$)

$$AB = |PI - LI|.$$

Le deuxième bloc 15b est un bloc de test :

- il reçoit le signal numérique précité AB de l'unité 15a et un signal numérique de valeur de seuil SE, qui pourrait être fixe, mais qui est en général fonction de la valeur de pixel ; on le fait alors varier dans le même sens que celui-ci pour constituer une correction de gamma (les moyens connus afin d'effectuer la variation de SE pour réaliser une correction de gamma étant représentés par le bloc optionnel 15e en traits interrompus) ; et

- il compare ces deux signaux numériques représentatifs de AB et SE afin de déterminer un signal binaire DP, c'est-à-dire pouvant prendre deux valeurs 1 et 0, qui signalent un dépassement ou un non-dépassement, respectivement, dudit seuil SE par AB :

- si AB est supérieur à SE, DP se verra attribuer, dans l'unité 15b, la valeur 1 représentative d'un dépassement ;
- si AB est inférieur ou égal à SE, DP recevra, dans l'unité 15b, la valeur 0 représentative de non-dépassement.

En fait lorsque DP = 1, il y a une trop grande différence entre PI et LI, c'est-à-dire entre le signal vidéo numérique d'entrée et le signal vidéo numérique précédent lissé, et il faut diminuer cette différence en réduisant la constante de temps de lissage et inversement si DP = 0 il faut augmenter cette constante de temps.

Le troisième bloc 15c réalise justement la variation désirée de valeur de la constante de temps en fonction de la valeur de DP :

- si DP = 1, le bloc 15c diminue d'une valeur unitaire U la contante de temps : CO (nouvelle valeur de cette constante) = CI (ancienne valeur de la constante) - U ;
- si DP = 0, le bloc 15c augmente de la même valeur unitaire U la constante de temps : CO = CI + U.

A cet effet le bloc 15c reçoit, sur une entrée, le signal de dépassement binaire précité DP en provenance du bloc 15b et, sur une autre entrée, le signal CI, qui est la valeur de la constante de temps antérieure stockée dans la mémoire 16, et effectue la diminution ou l'accroissement, de la valeur unité U, de la constante de temps entrante CI qui devient CO envoyée dans ladite mémoire 16 en remplacement de CI.

Avantageusement la constante de temps, dont dépend la convergence du lissage (en fonction du temps nécessaire pour que la valeur lissée atteigne la valeur d'entrée du signal vidéo numérique), est représentée par une puissance de 2, à savoir par une valeur $2^p$, et c'est alors ce nombre entier $p$ qui sera diminué ou augmenté, dans le bloc 15c, d'une unité, c'est-à-dire de 1 ; alors sur la Fig. 3 on a U = 1 pour $p$,

- si DP = 1, le bloc 15c soustrait une unité (1) du facteur $p$ de la constante de temps $2^p$, qui devient $2^{p-1}$ ;
- si DP = 0, le bloc 15c ajoute une unité (1) au facteur $p$ de la constante de temps $2^p$, qui devient $2^{p+1}$.

Le choix d'une constante de temps du type $2^p$ a le double avantage de correspondre à la physiologie de la vision humaine et de permettre des calculs plus simples, ce qui simplifie la structure du bloc 15c.

Le bloc 15c doit assurer en outre une double condition, à savoir garder CO entre deux valeurs limites : CO ne doit pas devenir négatif (CO ≥ 0) et ne doit pas dépasser un seuil N (CO ≤ N). Dans le cas particulier où CI et CO sont de la forme $2^p$, le seuil supérieur N est représenté par un nombre entier $n$ qui constitue une valeur maximale pour $p$.

Le seuil supérieur N (ou $n$) peut être soit constant, soit variable ; dans ce dernier cas une unité optionnelle 15f (en traits interrompus) réalise cette variation de N (ou $n$) sur l'ordre de l'utilisateur par exemple. Une augmentation de N a pour conséquence d'augmenter la sensibilité de la détection du déplacement, tandis que la diminution de N améliore la détection des grandes vitesses.

Enfin le quatrième bloc 15d reçoit, sur une première entrée, la valeur CO de la nouvelle constante de temps élaborée dans le bloc 15c, sur une deuxième entrée, le signal vidéo numérique d'entrée S sous la forme d'une information de valeur de pixel PI et, sur une troisième entrée, la valeur lissée du signal vidéo numérique d'entrée précédent, à savoir LI, en provenance de la mémoire 16 et il calcule

$$LO = LI + (PI - LI) / CO$$

qui est débité sur sa sortie.

En fait le terme (PI - LI) / CO représente la modification apportée à la valeur lissée du signal vidéo numérique, en tenant compte de la valeur modifiée CO de la constante de temps et il est proportionnel à la différence algébrique entre la valeur effective du pixel d'entrée actuel PI en provenance de la caméra 13 et sa valeur de lissage antérieure LI et inversement proportionnel à CO.

Si CO = $2^p$, alors

$$LO = LI + (PI - LI) / 2^{po}$$

en tenant compte de $po$, valeur de $p$ calculée dans l'unité 15c, et qui remplace dans la mémoire 16 la valeur précédente $pi$ de $p$.

Par conséquent l'unité de traitement temporel 15 à quatre blocs de calcul 15a, 15b, 15c, 15d :

- reçoit S(PI) de la caméra vidéo 13, les impulsions d'horloge HP, pour le cadencement des opérations, les signaux de seuil SE et N (ou $n$) ;
- détermine, à partir de signaux d'entrée LI et CI en provenance de la mémoire associée 16, des signaux actualisés LO et CO qui sont envoyés dans ladite mémoire en remplacement respectivement de LI et CI et qui représentent respectivement les nouvelles valeurs calculées du signal vidéo numérique lissé et de la constante de temps ;
- et débite en sortie, vers l'unité de traitement spatial 17, à travers l'unité à retards 18, le signal CO précité et le signal binaire de dépassement DP qu'elle a calculés à partir de PI, LI et SE.

L'opération de lissage a pour but de normaliser les variations de la valeur numérique du signal vidéo d'entrée pour chaque pixel ou point d'image, à savoir la variation de chaque PI, en réduisant les écarts de variation et en substituant, pour chaque pixel, aux valeurs successives réelles variables de PI en ce point d'image des valeurs lissées LO, moins variables que les valeurs PI.

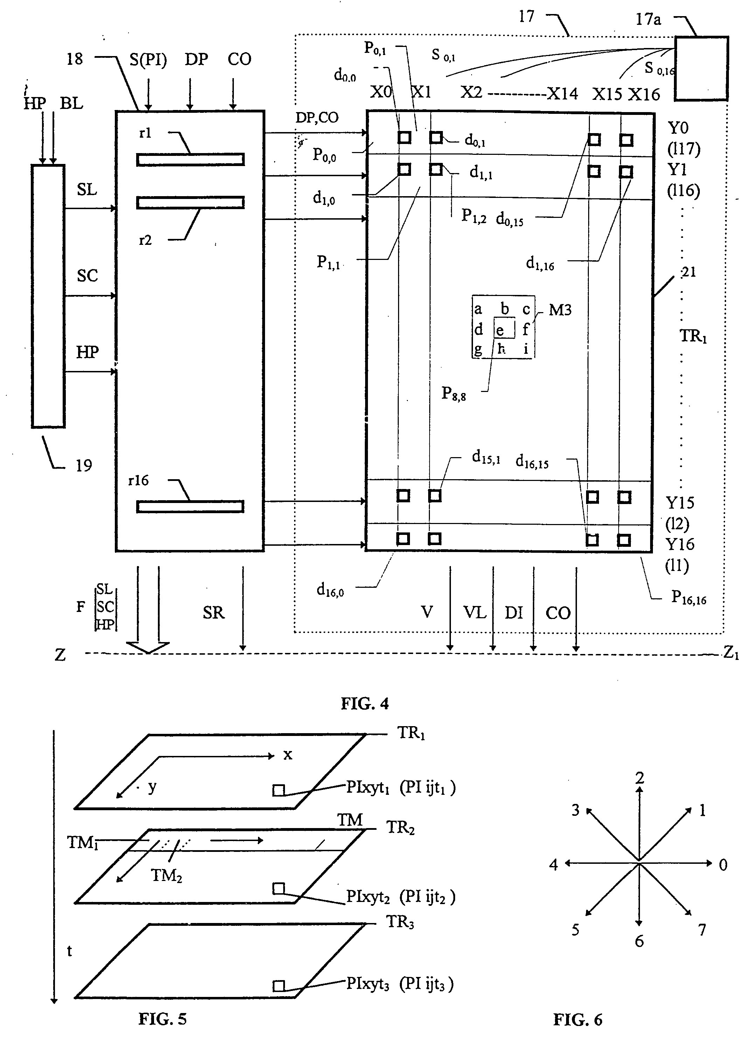

Ainsi à chaque PI entrant, l'unité de traitement temporel 15 substitue, en combinaison avec la mémoire 16, une valeur lissée LO à variations réduites, par mise en oeuvre d'un signal binaire DP de dépassement ou non d'un seuil et d'un signal CO de constante de temps qui sont actualisés et envoyés dans l'unité de traitement spatial 17 illustrée sur la Fig. 4.

On peut repérer chaque pixel à l'intérieur de la surface d'une trame par deux coordonnées (en principe orthogonales) d'abscisses et d'ordonnées, à savoir $x$ et $y$, en attribuant au pixel deux indices $i$ (numéro de la ligne) pour la coordonnée $y$ et $j$ (numéro du pixel dans la ligne) pour la coordonnée $x$. Chaque pixel d'indices $i$ et $j$ a une valeur vidéo (valeur de l'amplitude du signal vidéo) $PI_{ij}$.

Si on considère maintenant l'évolution, dans le temps $t$, des $PI_{ij}$ pour des trames correspondantes successives aux instants successifs $t_0$, $t_1$, $t_2$, $t_3$ ... , séparés par une période T correspondant à la période d'image (égale en général à deux périodes de trame) et qui peut être de 0,04 s dans le cas d'une fréquence de 25 Hz pour le signal d'image vidéo et de 0,0333...s dans le cas d'une fréquence de 30 Hz pour ce signal, ou de 50 Hz pour des capteurs à image progressive (1 trame/1 image), le signal d'un pixel vidéo d'indices de localisation $i$ et $j$ a des valeurs successives notées $PI_{ijt0}$, $PI_{ijt1}$, $PI_{ijt2}$, $PI_{ijt3}$ ... à ces instants $t_0$, $t_1$, $t_2$, $t_3$ ...

Dans le cadre de l'invention on substitue, dans l'unité de traitement temporel 15, à $P_{ijt}$ les valeurs de lissage successives $LO_{ijt}$, savoir $LO_{ijt0}$, $LO_{ijt1}$, $LO_{ijt2}$,

LO$_{ijt3}$ ...

Pour chacun des pixels ou points d'image successifs de coordonnées *i, j*, à l'instant *t*, c'est-à-dire P$_{ijt}$, on substitue à sa valeur réelle PI$_{ijt}$ une valeur lissée donnée par la formule

$$LO_{ijt} = LI_{ij(t-1)} + (PI_{ijt} - LI_{ij(t-1)}) / CO_{ijt}$$

La constante de temps est de préférence de la forme 2$^{pijt}$.

Les calculs effectués dans l'unité 15, notamment dans le bloc 15d, pour chaque intervalle de temps T séparant $t_1$ de $t_0$, $t_2$ de $t_1$, $t_3$ de $t_2$, etc. assurent une convergence de la valeur LO$_{ijt}$ vers la valeur PI$_{ijt}$, dont la rapidité dépend de la constante de temps qui est variable dans l'espace (et dépend donc de *i* et *j*) et dans le temps (et dépend donc de *t*) et qu'on peut écrire CO$_{ijt}$.

Dans tous les cas plus CO$_{ijt}$ est grand, plus la convergence de LO$_{ijt}$ est lente. Si CO$_{ijt}$ = 1, il n'y a plus de lissage.

On peut évidemment dans les formules précédentes substituer respectivement les coordonnées cartésiennes *y* et *x* aux indices *i* et *j* de numéro d'ordre de ligne et de pixel par ligne.

Le bloc 15a calcule AB = |PI - LI|, les indices *i, j* et *t* n'étant pas explicités, la grandeur AB étant représentative de la variabilité instantanée du signal vidéo numérique S(PI) par rapport au signal lissé LI, pour chaque triplet *i, j, t*.

C'est une des caractéristiques d'un dispositif selon l'invention de réaliser, dans l'unité 15 de traitement temporel, un lissage des valeurs de pixel, de déterminer les valeurs successives, pour chaque pixel, d'une constante de temps de lissage et d'un signal binaire de dépassement ou non-dépassement d'un seuil par la valeur absolue de la différence entre la valeur du pixel et la valeur lissée de ce pixel pour deux trames correspondantes successives, pour distribuer, suivant une matrice plane, à la fois les valeurs numériques, à un même instant, de ladite constante de temps et les valeurs dudit signal binaire pour les pixels d'une portion limitée de trame, portion qui balaie la trame, afin de localiser, grâce aux variations locales de ces deux valeurs à cet instant, une zone en mouvement relatif et de déterminer la vitesse et la direction (orientée) de déplacement effectif en fonction de cette répartition, ceci étant effectué un ensemble de traitement spatial, décrit ci-après avec référence à la Fig. 4.

La convergence du lissage est assurée par les blocs de calcul 15b et 15c qui déterminent une variation de la valeur de la nouvelle constante de temps entrante CO (en fait CO$_{ijt}$) telle qu'elle accélère la convergence. Ceci est réalisé en comparant AB (en fait AB$_{ijt}$) à un seuil SE, qui peut avoir une valeur constante ou de préférence variable et dans ce dernier cas être fonction de la valeur de pixel afin d'assurer une correction de gamma : si la valeur de pixel croît, le seuil croît et vice et versa.

Le résultat de la comparaison de AB avec le seuil SE (en fait SE$_{ijt}$ si le seuil varie en fonction de la valeur de pixel, cette variation étant réalisé dans un bloc éventuel de calcul 15e) génère dans le bloc 15b le signal binaire de déplacement DP à deux valeurs possibles 1 et 0, comme expliqué ci-dessus.

Le signal binaire DP arrive dans le bloc 15c pour faire varier la valeur de la constante de temps. A cette fin l'unité de calcul 15c reçoit également la valeur de la constante de temps entrante CI en provenance de la mémoire 16 et l'actualise en nouvelle valeur de la constante de temps CO qui est, entre autres, envoyée dans la mémoire 16 où elle est substituée à l'ancienne valeur CI ; en fait pour les valeurs de CI et CO, il s'agit de CI$_{ij}$ et CO$_{ij}$ à deux instants successifs, par exemple $t_0$ et $t_1$, séparés par l'intervalle T entre deux trames correspondantes (soit impaires, soit paires) successives.

Le bloc 15c recevant DP et CI ajoute ou soustrait une valeur unitaire (U) à la valeur de la constante de temps CI ou une unité à *p* lorsque CO est de la forme 2$^p$ suivant que le signal binaire DP représente un dépassement (DP = 1) ou un non-dépassement (DP = 0).

S'il y a dépassement, c'est que la valeur de cette constante est trop forte et on le diminue et vice et versa.

En outre le bloc 15c s'assure que la nouvelle valeur de la constante de temps CO, déduite de CI par addition ou soustraction d'une unité, reste comprise entre 0 (CO non négatif) et une valeur seuil N (CO non supérieur à N). Si cette double condition n'est pas remplie, le bloc 15c ne modifie pas la valeur de CI (qui était elle effectivement à l'intérieur de l'intervalle de 0 à N, limites comprises) et alors CO = CI.

La valeur limite supérieure N ou *n* peut ou bien être constante ou bien être variable ; dans ce dernier cas elle ne doit pas dépasser une valeur limite N max (ou *n* max) ; la variation éventuelle étant imposée par le bloc 15f sous l'effet d'une commande à la disposition de l'utilisateur.

En variante, on peut faire dépendre N ou *n* de PI (N, *n* et PI étant en fait affectés du triplet d'indices *i, j, t*) afin d'assurer une régulation de la variation de LO (qui est calculé dans le bloc 15d) en fonction du niveau de PI, ce qui peut s'exprimer par «N$_{ijt}$ ou *n*$_{ijt}$ est une fonction de PI$_{ijt}$», la détermination de N$_{ijt}$ ou *n*$_{ijt}$ = *f*(PI$_{ijt}$) étant effectuée dans un bloc de calcul substitué au bloc illustré 15f et recevant, en plus de N, la valeur de PI à partir de la caméra vidéo 13.

On peut avantageusement imposer à la constante de temps C (en fait à chaque C$_{ijt}$) la condition d'avoir une valeur numérique qui soit un multiple de 2, plus particulièrement une puissance de 2, quel que soient *i, j* et *t* ; dans ce cas particulier C$_{ijt}$ = 2$^{p(ijt)}$, *p* étant un nombre entier petit, fonction de *i, j* et *t*, représentable par un nombre réduits de bits. Cette condition procure les avantages supplémentaires mentionnés ci-dessus :

- la loi de convergence du lissage est voisine des lois de la physiologie de la vision humaine

- la réalisation électronique des blocs 15c et 15d est plus simple ; en particulier, dans le bloc 15d, qui a pour objet de déterminer l'évolution de la valeur de la constante de temps, pour chaque couple $i$, $j$, par la formule

$$LO = LI + (PI - LI) / CO,$$

les calculs sont simplifiés si CO est de la forme $2^p$ ($p$ étant un nombre entier petit), la valeur de seuil $n$ de $p$ étant elle-même un nombre entier petit, représentable par un nombre limité de bits.

Dans tous les cas, la nouvelle valeur LO de lissage du signal vidéo numérique d'entrée S est envoyée dans la mémoire 16 dans laquelle elle se substitue à LI (et ceci pour chaque couple d'indices $ij$).

On peut constater, à l'examen des Fig. 2 et 3 que l'unité de traitement temporel 15, qui comporte les blocs de calcul 15a, 15b, 15c, 15d, et éventuellement le bloc 15e et/ou le bloc 15f, et qui coopère avec la mémoire 16, détermine, comme exposé ci-dessus, et délivre en sortie, pour chaque triplet $i$, $j$, $t$,

- d'une part, la valeur lissée LO actualisée qui est transférée à la mémoire 16 en remplacement de la valeur de lissage antérieur LI
- d'autre part, deux signaux numériques, à savoir :
- un signal binaire DP, qui indique soit le dépassement (DP = 1), soit le non-dépassement (DP = 0) d'un certain seuil par la variation en valeur absolue du signal de pixel entrant en provenance de la caméra vidéo par rapport au signal de pixel antérieur lissé pour le même point ; et
- un signal numérique d'amplitude, constitué par la valeur de la constante de temps actualisée CO;

ces signaux numériques DP et CO sont reçus, à travers l'unité à retards 18, par l'unité de traitement spatial 17 qui sera décrite ci-après, le signal CO étant également reçu par mémoire 16 dans laquelle la valeur CO se substitue à la valeur antérieure CI pour le même pixel.

On voit donc que la capacité de la mémoire 16 pour stocker les valeurs successives du signal de pixel lissé, d'une part, et de la constante de temps, d'autre part, c'est-à-dire, en supposant qu'il y ait R pixels dans une trame, donc 2R pixels par image complète, doit être d'au moins $2R(e + f)$ bits en appelant $e$ et $f$ les nombres de bits attribués respectivement à un signal de pixel et à une constante de temps. En fait la capacité de la mémoire n'a pas besoin d'être beaucoup plus grande ; il suffit qu'elle dépasse $2R(e + f)$ bits du nombre de bits nécessaire pour assurer son fonctionnement correct, notamment pour l'adressage et l'extraction des bits des signaux de pixel lissés et des bits des constantes de temps en fonction des indices $i$ et $j$. Si chaque image vidéo est constituée par une seule trame il suffira de R

$(e + f)$ bits au lieu de $2R(e + f)$ bits.

Les sorties $DP_{ij}$ et $CO_{ij}$, à un instant $t$, de l'ensemble de traitement temporel 15 sont analysées et utilisées dans un ensemble de traitement spatial illustré sur la Fig. 4, l'assemblage des Fig. 3 et 4 étant illustré sur la Fig. 2.

En fait l'ensemble 15 de traitement temporel traite les signaux de trames, tandis que l'ensemble 17 de traitement spatial de la Fig. 4 traite les sous-séquences de lignes et de pixels dans une trame.

Sur la Fig. 5 on a schématisé le traitement temporel des séquences de trames correspondantes successives $TR_1$, $TR_2$, $TR_3$ superposées sur la figure et le traitement spatial dans la première de ces trames, c'est-à-dire $TR_1$, en illustrant les coordonnées cartésiennes $x$ et $y$ et un pixel PI de coordonnées $y$, $x$, c'est-à-dire d'indices $i$, $j$ au temps $t_1$ ; les pixels successifs de mêmes indices $ij$ sur les trois trames $TR_1$, $TR_2$, $TR_3$ sont indexés $i,j,t_1$, $ijt_2$ et $ijt_3$ respectivement et ils ont les valeurs de pixels $PI_{ijt1}$, $PI_{ijt2}$ et $PI_{ijt3}$ respectivement. Un plan de la Fig. 5 correspond à un traitement spatial d'une trame, tandis que la superposition des plans correspond au traitement temporel (le temps $\underline{t}$ étant la variable)

L'unité de traitement spatial 17, à laquelle est associé une unité à retards 18 (également illustrée sur la Fig. 4), coopère avec une unité de commande 19 qui est contrôlée par une horloge 20 qui débite une impulsion d'horloge HP à chacun des signaux de pixel successifs (Fig. 2 pour l'ensemble)

Les sorties $DP_{ij}$ et $CO_{ij}$ de l'unité 15 de traitement temporel sont réparties dans l'unité 17 suivant une matrice 21 de dimension réduite comportant un nombre de lignes et un nombre de colonnes très inférieurs respectivement au nombre de lignes L et de pixels M par ligne des $DP_{ij}$ et $CO_{ij}$ à un instant $t$ donné. En particulier la matrice peut comprendre $2l + 1$ lignes suivant l'axe des $y$ et $2m + 1$ colonnes suivant l'axe des $x$ (en coordonnées cartésiennes), $l$ et $m$ étant des nombres entiers petits. Avantageusement on choisit $l$ et $m$ parmi les puissances de 2, $l$ étant égal à $2^a$ et $m$ à $2^b$, $a$ et $b$ étant des nombres entiers de l'ordre de 2 à 5 par exemple. Pour simplifier le dessin et l'explication, on prend, à titre d'exemple, $m = l$ (bien qu'ils puissent être différents) et $m = l = 2^3 = 8$ ; dans ce cas la matrice 21 aura $2 \times 8 + 1 = 17$ lignes et 17 colonnes.

Sur la Fig. 4 on a représenté une partie des 17 lignes $Y_0$, $Y_1$, ... $Y_{15}$. $Y_{16}$ et une partie des 17 colonnes $X_0$, $X_1$, ... $X_{15}$. $X_{16}$ constituant la matrice 21 de l'unité 17.

Il s'agit de répartir suivant la matrice 21 à $l + 1$ lignes, en particulier 17 lignes, et $m + 1$ colonnes, en particulier 17 colonnes, les flux entrants des $DP_{ijt}$ et $CO_{ijt}$, c'est-à-dire des signaux binaires de dépassement DP et des signaux numériques d'amplitude représentant la constante de temps CO, qui arrivent de l'unité 15 de traitement temporel, suivant une distribution matricielle plus étendue pour une trame, à savoir de L lignes, en particulier 312,5, et M pixels par ligne, en particulier de l'ordre de 250 à 800 suivant le standard TV utilisé.

Pour distinguer les deux matrices à savoir celle du signal vidéo de L x M et celle de l'unité 17 de *l* x *m,* référencée 21, on utilisera les indices *i* et *j* suivant les deux coordonnées de la première (qui n'apparaît que lorsqu'on visualise sur un écran de téléviseur ou moniteur le signal vidéo numérique) et les indices *x et y* suivant les deux coordonnées de la seconde (représentée sur la Fig. 4) ; à un instant donné, un pixel de valeur instantanée $PI_{ijt}$ est caractérisé à l'entrée de l'unité de traitement spatial 17 par deux signaux numériques $DP_{ijt}$ et $CO_{ijt}$. La matrice du L x M de ces deux signaux se déplace par balayage à travers la matrice 21 de $(2l + 1)$ x $(2m + 1)$ beaucoup plus petite, comme expliqué ci-après avec référence à la Fig. 4, la matrice 21 matérialisant $(2l + 1)$ x $(2m + 1)$ pixels correspondant à une même trame.

Dans cette matrice 21, chaque pixel est défini par un numéro d'ordre de ligne compris entre 0 et 16 (bornes incluses) pour les lignes $Y_0$ à $Y_{16}$ respectivement et un numéro d'ordre de colonne compris entre 0 et 16 (bornes comprises) pour les colonnes $X_0$ à $X_{16}$ respectivement, dans le cas où $l = m = 8$, soit $2l + 1 = 2m + 1 = 17$. Dans ce cas la matrice 21 réalisera une représentation dans le plan de 17 x 17 = 289 pixels, alors que la matrice du signal vidéo comportera plusieurs dizaines ou centaines de milliers des pixels ou même d'avantage.

Sur la Fig. 4, on a illustré par des rectangles allongés horizontaux $Y_0$ à $Y_{16}$, dont seulement quatre ont été représentés, à savoir $Y_0$, $Y_1$, $Y_{15}$ et $Y_{16}$, et par des lignes verticales $X_0$ à $X_{16}$, dont seulement quatre ont été représentées, à savoir $X_0$, $X_1$, $X_{15}$ et $X_{16}$, cette matrice 21 (de l'unité 17) à 17 x 17 points d'image ou pixels d'indices définis à l'intersection d'une ligne d'ordonnée et d'une colonne d'abscisse. Par exemple la position de pixel $P_{88}$ est à l'intersection de la colonne 8 et de la ligne 8, comme illustré sur la figure en <u>e</u>, centre de la matrice 21.

Pour réaliser la répartition spatiale successive de portions de cette matrice de L x M suivant la matrice 21 de $(2l + 1)$ $(2m + 1)$, on associe à l'unité 17 une unité à retards 18 qui reçoit, d'une part, les signaux DP et CO (affectés des indices *ijt*) et, d'autre part, le signal de pixel d'entrée S, c'est-à-dire PI (également d'indices *ijt)*, ainsi qu'un signal HP en provenance d'une horloge 20 et des signaux de séquence ligne SL et de séquence colonne SC (Fig. 2 et 4).

Comme représenté sur la Fig. 1, le signal S(PI) comporte, en plus des signaux de valeurs de pixel tels que $a_{1,1}$, $a_{1,2}$ constituant une séquence temporelle (trames successives) et des sous-séquences spatiales (pixels par lignes dans chaque trame), des signaux de synchronisation ST, SL, dont l'unité d'horloge 20 déduit non seulement un signal d'horloge, à la fréquence de 13,5 MHz par exemple, à savoir un top pour chaque pixel d'une trame vidéo, mais également des signaux de blanking BL qui rendent non-opératoire l'unité 19 pendant les signaux de synchronisation précités.

En réponse à ces signaux HP et BL en provenance de l'horloge 20 (Fig. 2) l'unité de cadencement 19 débite sur l'unité à retards 18 un signal de séquence lignes SL à une fréquence égale au quotient de 13,5 MHz par le nombre de colonnes par trame, soit par exemple 400, et un signal de trame SC dont la fréquence est égale au quotient précité 13,5/400 MHz divisé par le nombre de lignes d'image vidéo, par exemple 312,5, ainsi que HP.

C'est à partir de ces signaux SL et SC et du signal d'horloge HP que l'unité 18 assure la répartition spatiale ligne par ligne suivant la matrice 21.

A cet effet les lignes successives $Y_0$ à $Y_{16}$ reçoivent les signaux DP et CO:

- non retardés (ligne $Y_0$) ;
- retardés d'une période TP, égale à la durée d'une ligne de trame (ligne $Y_1$),
- retardés de 2TP (ligne $Y_2$), et ainsi de suite jusqu'à
- retardés de 16TP (ligne $Y_{16}$).

Les retards successifs de la durée d'une ligne de trame, savoir TP, sont réalisés dans une cascade de seize circuits à retard $r_1$, $r_2$, ... $r_{16}$ qui desservent les lignes $Y_1$, $Y_2$ ... $Y_{16}$ respectivement, la ligne $Y_0$ étant desservie directement par les signaux DP et CO non retardés en provenance de l'unité 15.

L'ensemble des circuits $r_1$, $r_2$, $r_{16}$ peut être constitué par une ligne à retard à seize sorties, le retard imposé par une section quelconque entre deux sorties successives étant constant et égal à TP.

Le défilement de la totalité de la matrice trame de L x M sur la matrice 21 de $(2l + 1)$ $(2m + 1)$ est assurée, en ce qui concerne les lignes successives des trames successives par roulement, par l'unité de cadencement 19 grâce aux signaux SL de séquence lignes, comme suit.

En ce qui concerne le déplacement par roulement des pixels d'une ligne de la matrice d'une trame sur la matrice de 17 x 17, par exemple de $X_0$ à $X_{16}$ sur la ligne $Y_0$, elle est réalisée par une cascade de seize registres à décalage *d* sur chacune des 17 lignes de $Y_0$ à $Y_{16}$ (soit au total 16 x 17 = 272 registres à décalage) disposés dans chaque ligne entre deux positions successives de pixels, soit entre les positions $PI_{00}$ et $PI_{01}$ le registre $d_{01}$, entre les positions $PI_{01}$ et $PI_{02}$ le registre $d_{02}$, etc. Chaque registre impose un retard de TS égal à l'écart temporel entre deux pixels successifs d'une ligne, grâce aux signaux SC de séquence colonne.

On notera que du fait que les lignes $l_1$, $l_2$,...$l_{17}$ d'une trame $TR_1$ (Fig. 1), tant pour S(PI) que pour DP et CO, arrivent décalées de TP (durée complète d'une ligne) l'une après l'autre à l'unité 18 et que celle-ci les distribue avec des retards croissant progressivement de TP sur les lignes $Y_0$, $Y_1$ ... $Y_{17}$, celles-ci affichent à un instant donné les signaux de DP et CO pour les lignes $l_1$, $l_2$, .... $l_{17}$ d'une même portion de trame.

De même dans une ligne donnée, telle que $l_1$, les signaux de pixels successifs $a_{1,1}$, $a_{1,2}$... arrivent décalés de TS et les registres à décalage $\underline{d}$ imposent un retard également égal à TS ; il en résulte donc que les signaux de DP et CO pour des pixels d'une ligne donnée $Y_0$ à $Y_{16}$ de la matrice 21, pixels disponibles sur cette ligne, sont contemporains, c'est à dire qu'ils correspondent à une même portion de trame.

Il s'agit donc, tant pour les lignes que pour les pixels de ces lignes d'une portion de trame, d'un traitement purement spatial, car la matrice 21 affiche, en ses 17 x 17 positions de pixels, les valeurs de DP et CO pour les 17 pixels de chacune des 17 lignes d'une même matrice du signal vidéo numérique S(PI), bien que ces pixels, tels que $a_{1,1}$, arrivent successivement ligne par ligne et pixel par pixel dans chacune des lignes successives (Fig. 1) dans l'unité 18, de même que les signaux correspondants DP et CO qui sont affichés.

Les signaux représentatifs des CO et des DP contemporains de la matrice 21 sont disponibles, à un instant donné, sur les 16 x 17 = 272 sorties des registres à décalage, ainsi qu'en amont des 17 registres en tête des 17 lignes, c'est-à-dire des registres $d_{0,1}$, $d_{1,1}$ ... $d_{16,1}$, ce qui fait au total 16 x 17 + 17 = 17 x 17 sorties pour les 17 x 17 positions $P_{0,0}$, $P_{0,1}$, ... $P_{8,8}$ ... $P_{16,16}$.

A l'intérieur de la matrice 21, autour du centre de celle-ci $\underline{e}$ de coordonnées $x = 8$, $y = 8$ (et c'est pour cela que le nombre de lignes et le nombre de colonnes de la matrice 21 est de préférence impair : $2l + 1$ et $2m + 1$ respectivement), on peut considérer en particulier une petite matrice de 3 lignes et de 3 colonnes dont l'élément central de ses 9 éléments est justement le pixel $\underline{e}$ de coordonnées $x = 8$, $y = 8$. Soit

| | | |
|---|---|---|
| $a$ | $b$ | $c$ |
| $d$ | $\underline{e}$ | $f$ (M3) |
| $g$ | $h$ | $i$ |

cette petite matrice, dont l'élément central $\underline{e}$ a été souligné.

A cette matrice de 3 x 3 éléments, comportant 8 emplacements $a$, $b$, $c$, d, $f$, $g$, $h$, $i$ tout autour de l'élément ou emplacement central $\underline{e}$, on peut faire correspondre 8 directions orientées partant chacune de l'emplacement central $\underline{e}$ et aboutissant à l'un des 8 autres.

A cet effet, on peut repérer les 8 directions au moyen du code de Freeman illustré sur la Fig. 6, les directions étant codées de 0 à 7, à partir de l'axe des $x$, de 45° en 45°. En code de Freeman, les 8 directions orientées possibles numérotées de 0 à 7, sont représentables par un nombre à 3 bits, car $2^3 = 8$, à savoir 8 possibilités.

Si on reprend la petite matrice précédente M3, les 8 directions selon le code de Freeman à partir de la position centrale $\underline{e}$ sont les suivantes

| | | |
|---|---|---|
| 3 | 2 | 1 |

(suite)

| | | |
|---|---|---|
| 4 | $\underline{e}$ | 0 |
| 5 | 6 | 7 |

comme explicité sur la Fig. 6.

Revenant à la matrice 21 de la Fig. 4 à 17 x 17 points d'image ou pixels, on va exposer d'abord comment on y repère une zone en déplacement relatif par rapport à un environnement sensiblement immobile dans la scène, observée par la caméra vidéo 13 et donc représentée dans le signal numérique vidéo S composé de pixels $PI_{ijt}$, et comment on détermine la vitesse et la direction orientée d'un déplacement effectif par rapport à un environnement sensiblement immobile.

Entre deux trames successives, telles que $TR_1$ et $TR_2$ (Fig. 5), les $PI_{ij}$ pixels du signal S seront caractérisés, en ce qui concerne leur variation entre l'instant $t_1$ (première trame) et l'instant $t_2$ (deuxième trame) par les deux signaux $DP_{ij}$ et $CO_{ij}$ repartis par balayage suivant la matrice 21.

Il existe une variation significative de la valeur de pixel en un point de cette matrice si DP = 1 pour ce point. Donc une zone en déplacement effectif est repérée par la zone de la matrice à l'intérieur de laquelle DP = 1 en chaque point.

En fait on examine simultanément, dans une unité de calcul 17a, à l'intérieur de la matrice 21 à 17 x 17 emplacements, les différentes matrices carrées emboîtées centrées sur $\underline{e}$ de dimensions 15 x 15, 13 x 13, 11 x 11, 9 x 9, 7 x 7, 5 x 5 et 3 x 3, cette dernière étant la matrice M3 précitée. On détermine quelle est la matrice parmi celles-ci qui est celle de plus petite dimension à posséder des DP = 1 alignés suivant une droite qui détermine la direction du déplacement de la zone dans laquelle DP = 1 et qui détermine une variation de + 1 et - 1 autour de CO. Pour une variation de + 1 et - 1 autour de CO, il faut que DP = 1 à chaque valeur, pour accepter le test. C'est la matrice la plus petite participant au test qui est choisie (ligne de plus grande pente).

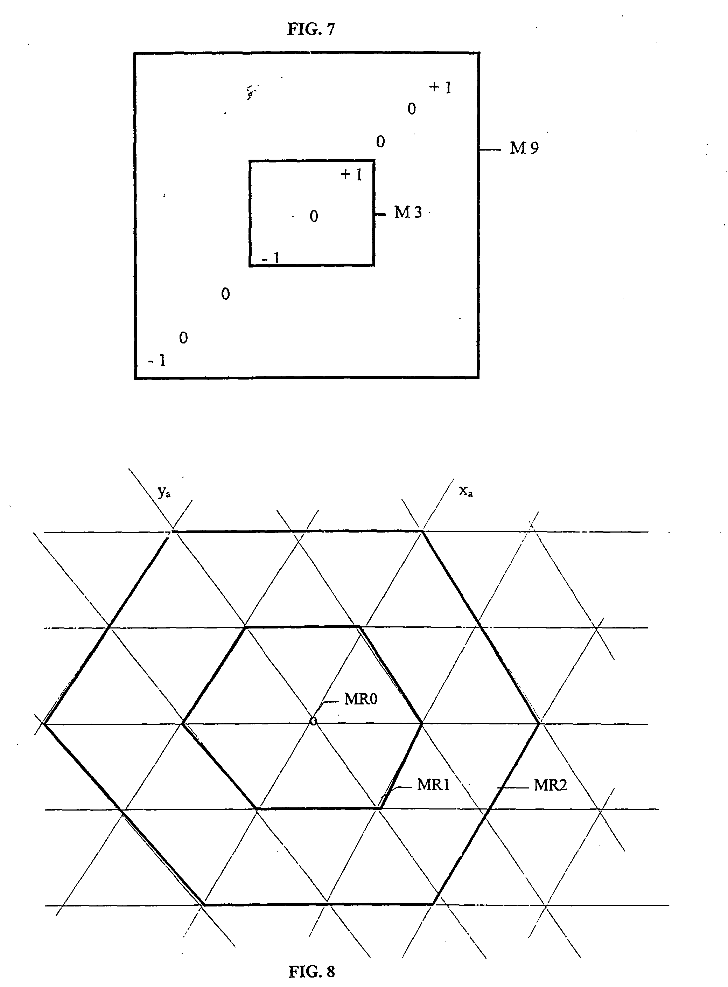

Ensuite à l'intérieur de cette zone en déplacement dans une des matrices emboîtées, par exemple dans la petite matrice M3 de 3 x 3 éléments, on détermine si CO varie de chaque coté de la position centrale, dans une direction donnée, de + 1 dans une direction orientée et de - 1 dans la même direction mais de sens opposé. Par exemple si on a - 1, 0, + 1 dans la direction (orientée) 1, c'est-à-dire dans les positions $g$, $e$, $c$ respectivement de la petite matrice M3, alors le déplacement existe dans cette matrice de droite à gauche dans la direction (orientée) 1 du code de Freeman (Fig. 6). Bien entendu simultanément dans cette direction de la petite matrice DP = 1. Plus CO varie de + 1 ou - 1 entre deux positions voisines suivant une direction dans une matrice de plus grande taille parmi les matrices emboîtées de 3 x 3 à 15 x 15, plus la vitesse du déplacement est grande. Par exemple si on a - 1, 0, + 1 dans la direction orientée 1, c'est-à-dire *g, e, c,* dans la matrice de 9 x 9, référencée $M_9$ le déplacement sera plus rapide que dans le cas où l'on a - 1, 0, + 1 dans la matrice $M_3$ de 3 x 3 (Fig. 7).

Du fait que CO est une puissance de 2 et est représentée par cette puissance dans les modes de réalisation préférés, on peut repérer une gamme étendue de vitesses en utilisant quelques bits seulement pour la puissance de 2, tout en repérant même une vitesse relativement faible (qu'on peut choisir en augmentant l'écart pour le test ; par exemple - 2, 0, + 2 dans la matrice M3 de 3 x 3 indique une vitesse deux fois plus faible par rapport à la vitesse correspondante à la matrice M3 de - 1, 0, + 1, et ce pour les mêmes positions *g,e,c*).

Il y a lieu de prévoir en outre deux tests pour lever les incertitudes :

- un premier test choisit la variation la plus forte, c'est-à-dire la constante de temps la plus élevée, dans le cas où l'on a dans une des matrices emboîtées, par exemple dans la petite matrice M3 de 3 x 3 éléments, des variations de CO suivant plusieurs directions ;
- un second test choisit, arbitrairement, une direction parmi deux (ou plusieurs) directions suivant lesquelles la variation de CO est identique, par exemple en choisissant la valeur la plus faible du code de Freeman ; en fait un tel cas se produit la plupart du temps lorsque la direction (orientée) réelle du déplacement se trouve sensiblement entre deux directions codées successives dans le code de Freeman, par exemple entre les directions 1 et 2, ce qui correspond à une direction (orientée) pouvant être notée 1, 5 (Fig. 6), faisant environ 67,5° avec celle de l'axe des *x* (direction 0 dans le code de Freeman).

La détermination de la direction orientée et de la vitesse d'une zone en déplacement effectif de la manière qui vient d'être décrite est réalisée par l'unité de calcul 17a (Fig. 4) associée à l'unité 17 et qui reçoit les 17 x 17 sorties précitées de la matrice 21, tant pour CO que pour DP (deux sorties de 21, à savoir $s_{0,1}$ et $s_{0,16}$, sont représentées). L'unité 17a traite les valeurs de CO et DP pour les matrices emboîtées successives et détermine d'après ces valeurs la direction orientée (dans le code de Freeman) et la vitesse du déplacement (suivant la matrice à retenir parmi les matrices emboîtées), en appliquant éventuellement les tests précités.

Le défilement de la totalité d'une trame du signal vidéo numérique à travers la matrice 21 a lieu

- d'abord pour le groupe des 17 premières lignes, lignes 1 à 17, de la trame : de la gauche vers la droite de la trame en considérant le mouvement relatif, comme illustré pour la trame $TR_2$ sur la Fig. 5 : de la portion $TM_1$ à l'extrême gauche, puis $TM_2$ décalée d'une colonne par rapport à $TM_1$ et ceci jusqu'à

$TM_M$ (M étant le nombre de pixels par ligne de trame) à l'extrême droite ;
- ensuite, de manière analogue de la gauche vers la droite de colonne en colonne, pour les lignes 2 à 18 de la trame ; et
- ainsi de suite en descendant chaque fois d'une ligne : ligne 3 à 19... jusqu'au dernier groupe en bas de la trame, à savoir celui des lignes L - 16 ... L (L étant le nombre de lignes par trame).

En considérant les Fig. 2 et 4 on voit que les sorties des unités 17, 18 et 19, c'est-à-dire de l'ensemble de traitements spatial, sont :

- un signal V représentant la vitesse du déplacement, d'après l'amplitude de la variation maximale de CO dans la zone repérée, dont la valeur peut être par exemple représentée par une échelle de huit nombres entiers de 0 à 7 si la vitesse est sous la forme numérique de puissances de 2, donc comporte 3 bits ;
- un signal DI représentant la direction de ce déplacement, d'après la direction de cette variation maximale, la valeur de DI pouvant également être représentée par une parmi les huit valeurs de 0 à 7 dans le code de Freeman, donc comporter 3 bits ;
- un signal de validation VL précisant que le résultat pour la vitesse et la direction (orientée) est valide, afin de pouvoir distinguer une sortie valide avec V = 0 et DI = 0, de l'absence de sortie due à un incident, ce signal étant soit 1 (sortie valide) soit O (sortie absente) ; donc un seul bit est nécessaire pour VL ;
- avantageusement un signal CO de constante de temps, donc de 3 bits par exemple ;
- (les 3 ou 4 signaux V, DI, VL et éventuellement CO étant débités par l'unité 17 de traitement spatial et son électronique associée)
- un signal vidéo retardé SR constitué par le signal vidéo d'entrée S retardé dans l'unité à retards 18 des 16 durées consécutives de lignes TR et donc de la durée de la répartition du signal S dans la matrice 21 de 17 x 17, de manière à disposer du signal vidéo numérique contemporain de la représentation matricielle dans la matrice 21, signal dont le contenu peut être affiché en clair sur l'écran d'un téléviseur ou d'un moniteur ;
- l'ensemble des trois signaux de sortie de l'unité 19, à savoir les signaux d'horloge HP, de séquence ligne SL et de séquence de colonne SC.

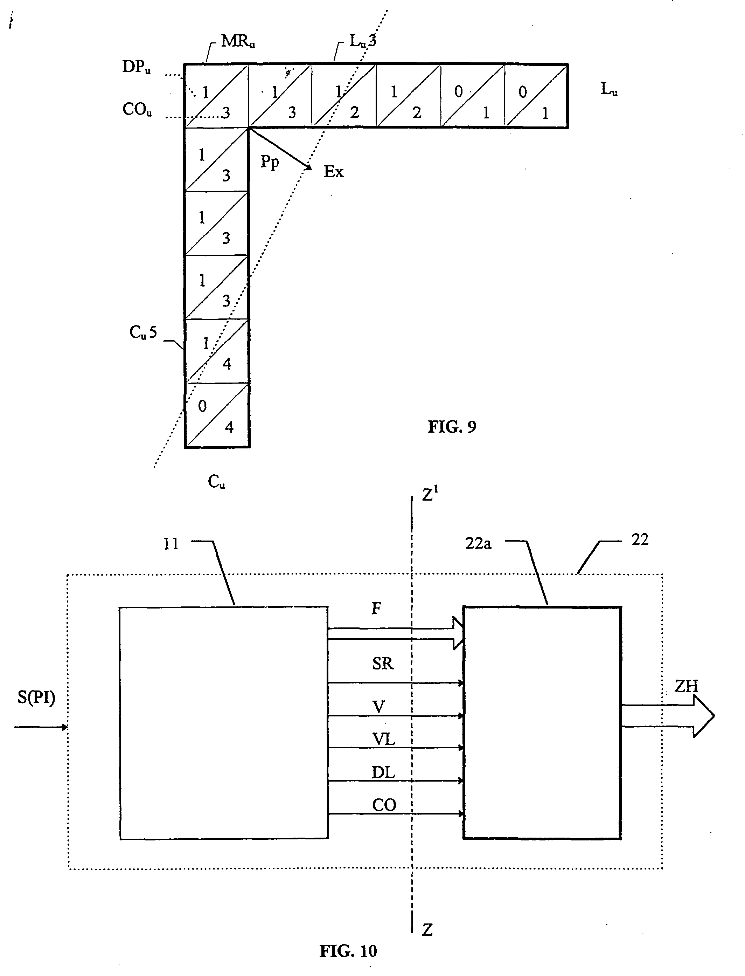

Aux matrices rectangulaires emboîtées des Fig. 4 et 7, on peut substituer des matrices hexagonales emboîtées (Fig. 8) ou une matrice en forme de L renversé (Fig. 9).

Dans le cas de la Fig. 8, les matrices emboîtées (dont on n'a représenté que les matrices MR1 et MR2 les plus centrales) sont toutes centrées sur le point MR0 qui correspond au point central (en lequel le signal binaire est «0») des matrices M3, M9 de la Fig. 7. L'avantage d'un système de matrices hexagonales c'est qu'il permet, d'une part, d'utiliser des axes de coordonnées obliques, $x_a$, $y_a$ et, d'autre part, une décomposition en triangles ayant des cotés identiques, ce qui réalise le calcul des vitesses isotropes.

La matrice de la Fig. 9 est composée d'une seule ligne $L_u$ et d'une seule colonne $C_u$ à partir de la case centrale $MR_u$ dans laquelle les deux signaux DP et CO valent respectivement «1» pour DP et augmente ou diminue d'une unité pour CO, en cas de déplacement.

On détermine ainsi si la direction du déplacement (relatif) est

- dans le sens de la coordonnée $x$ : le signal CO est identique dans toutes les cases de la colonne $C_u$, et le signal binaire DP est égal à 1 dans les cases de la ligne $L_u$, de l'origine $MR_u$ à la valeur $CO_u$ jusqu'à la case où CO vaut $CO_u$ + 1 ou - 1 inclus ;
- dans le sens de la coordonnée $y$ : le signal CO est identique dans toutes les cases de la ligne $L_u$, et le signal binaire DP est égal à 1 dans les cases de la colonne $C_u$, de l'origine $MR_u$ à la valeur $CO_u$ jusqu'à la case où CO vaut $CO_u$ + 1 ou - 1 inclus ;
- ou enfin oblique relativement à $x$ et $y$ : le signal binaire DP est égal à 1 et CO vaut $CO_u$ dans les cases de $L_u$ et dans les cases de $C_u$, la pente étant déterminée par la perpendiculaire à la ligne passant par les deux cases dans lesquelles le signal $CO_u$ change de valeur d'une unité, le signal DP étant toujours égal à 1.

Sur la Fig. 9 on a illustré le cas où DP = 1 et $CO_u$ change de valeur d'une unité dans deux cases particulières $L_{u3}$ et $C_{u5}$ et indiqué la pente correspondante $P_p$.

Dans tous les cas, la vitesse du déplacement est fonction de la case dans laquelle CO change de valeur d'une unité.

Si CO change d'une unité que dans $L_u$ ou $C_u$ , elle correspond à la valeur de la case de variation de CO.

Si CO change d'une unité dans une case de $L_u$ et dans une case de $C_u$, la vitesse est proportionnelle à la distance entre $MR_u$ et $E_x$ (intersection de la ligne perpendiculaire à $C_u$ -$L_u$ passant par $MR_u$).

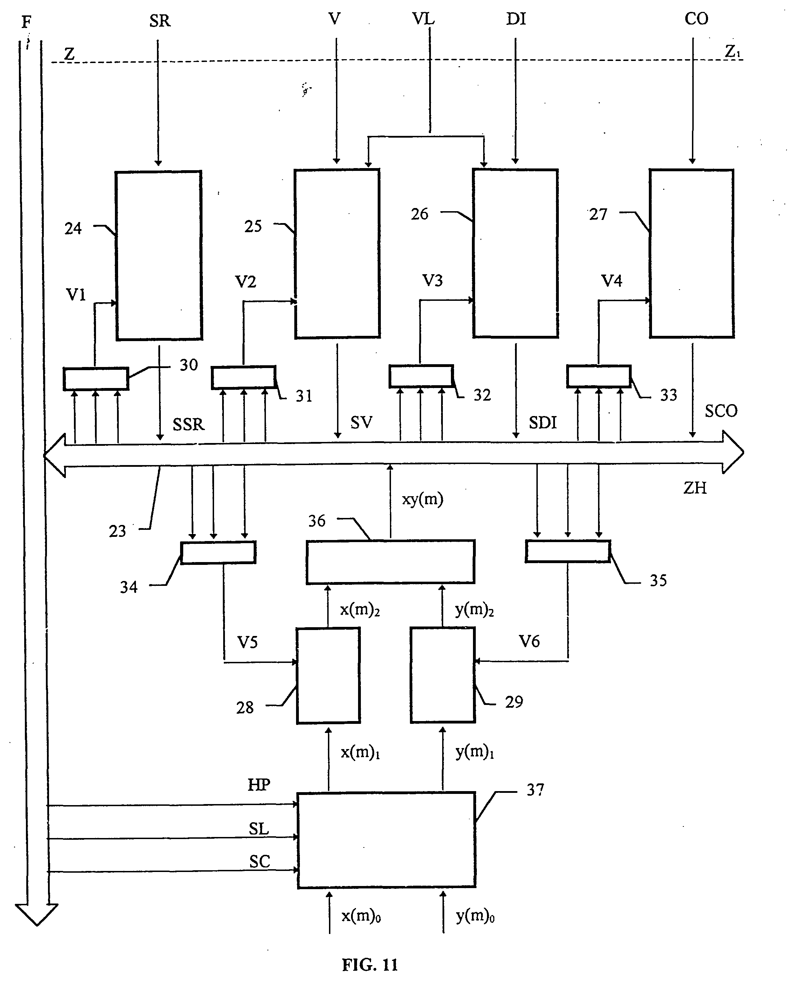

Le système décrit jusqu'à présent avec référence aux Fig. 1 à 9 est avantageusement complété par un système complémentaire qui va être décrit avec référence aux Fig. 11 à 16 pour constituer un système global 22 illustré sur la Fig. 10, sur laquelle on a représenté, d'une part, l'ensemble 11a de la Fig. 2 avec indication des signaux V, DI, VL, C, SR et composite F (HP, SL, SC) envoyés par l'ensemble 11 (qui reçoit le signal vidéo numérique d'entrée S) à l'ensemble 22a (qui débite une sortie composite ZH).

La ligne d'assemblage Z - $Z_1$ entre les ensembles 11a et 22a est illustrée sur les Fig. 2, 10 et 11, les sorties de l'ensemble 11a étant connectées aux entrées de l'ensemble 22a suivant Z - $Z_1$ pour transmettre les signaux précités.

La sortie de l'unité 22a et donc du dispositif global 22 est constituée par un signal composite ZH fournissant l'information désirée sur la zone en déplacement relatif de la scène 13a surveillée par la caméra vidéo 13.

L'unité complémentaire 22a, connectée aux sorties de l'unité 11a, est illustrée sur la Fig. 11 sous la forme de blocs fonctionnels, en rappelant que cette figure se raccorde suivant la ligne Z - $Z_1$ (à sa partie supérieure) à la Fig. 2 suivant la ligne Z - $Z_1$ (à la partie inférieure de cette dernière figure).

L'unité de la Fig. 11 constitue essentiellement un dispositif de formation et d'utilisation d'histogrammes et elle comporte :

- une micro-ligne bus 23 qui véhicule un certain nombre de signaux numériques, détaillés ci-après ;
- six blocs ou unités de formation et de traitement d'histogrammes, référencés 24, 25, 26, 27, 28, 29, respectivement pour les histogrammes de signaux vidéo numériques retardés SR, de vitesses V, de directions orientées (en code de Freeman) D1, de constantes de temps CO, de premiers axes $x(m)$ et de seconds axes $y(m)$ ;
- six blocs ou unités de combinaison linéaire 30, 31, 32, 33, 34, 35 associant leurs entrées en provenance du bus 23 pour former chacune un signal de validation $V_1$, $V_2$, $V_3$, $V_4$, $V_5$, $V_6$ pour les six blocs 24, 25, 26, 27, 28, 29 respectivement, 30 étant associée à 24, 31 étant associé à 25, 32 étant associé à 26, 33 étant associé à 27, 34 étant associé à 28 et 35 étant associé à 29 ;
- un bloc ou unité de zone en mouvement 36 coordonnant les sorties des blocs 28 et 29 pour les axes $x(m)$ et $y(m)$ ; et
- un bloc ou unité de changement de repère 37 recevant des signaux $x(m)_0$ et $y(m)_0$ d'orientation des axes $x(m)$ et $y(m)$, ainsi que des signaux d'horloge de pixel HP, de séquence ligne SL et de séquence colonne SC (ces trois signaux étant groupés dans le faisceau F des Fig. 2, 4, 10 et 11) en provenance de l'unité 19 des Fig. 2 et 4, et formant les signaux $x(m)_1$ et $y(m)_1$ envoyés respectivement aux unités 28 et 29.

Les unités 24, 25, 26, et 27 débitent chacune sa sortie SSR, SV, SDI, SDO sur le bus 23, alors que les unités 28 et 29 débitent chacune un signal $x(m)_2$, $y(m)_2$ sur une des deux entrées de l'unité de zone en mouvement 36, qui combine ces deux signaux en provenance des unités 28 et 29 et débite en sortie un signal composite $xy(m)$ sur le bus 23.

Le fonctionnement de chacune des unités 24 à 29 de formation et de traitement d'histogramme, qui reçoit en entrée, d'une part, un signal de validation $V_1$, $V_2$, $V_3$, $V_4$, $V_5$ ou $V_6$ de l'unité de combinaison linéaire 30 à 35 associée et, d'autre part, un signal SR, V, DI, CO, $x(m)_1$ ou $y(m)_1$ à traiter, est le même et c'est pourquoi, on exposera le fonctionnement d'une seule de ces unités, à savoir l'unité 25 concernant la formation et le traitement des histogrammes de vitesse V, prise à titre d'exemple ; seule la variable traitée est différente pour les autres unités analogues 24, 26, 27, 28 et 29, en notant que les différants signaux d'entrée pour les six unités 24 à 29 sont tous des signaux numériques, ce qui permet une analogie de structure et de fonctionnement des ces six unités.

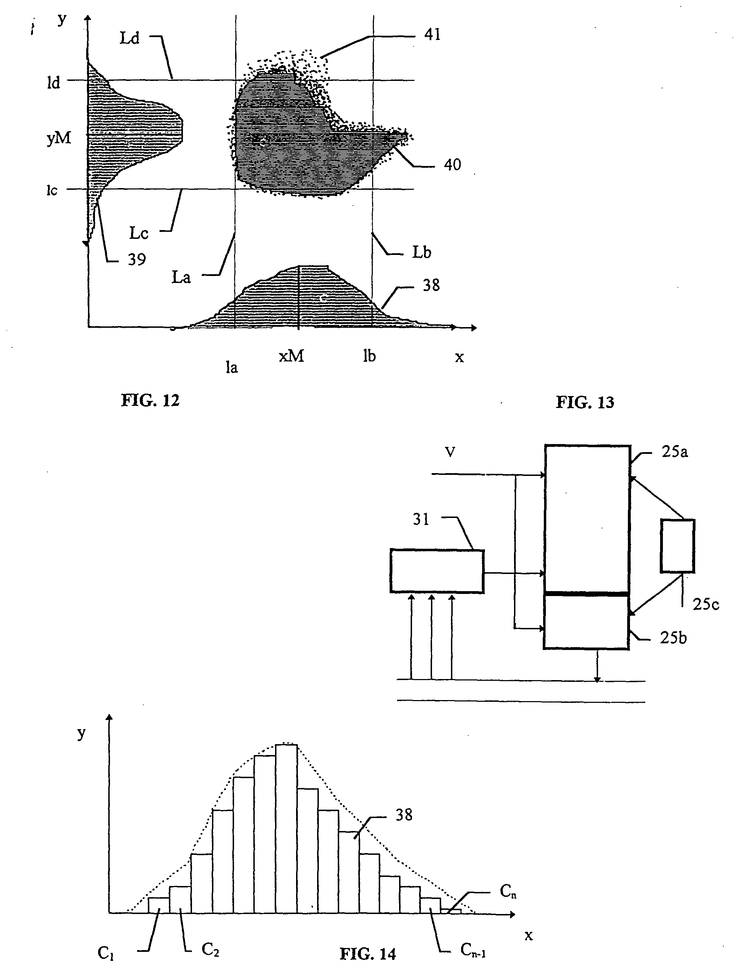

Sur la Fig. 12, on a représenté schématiquement, chacun par son enveloppe, les histogrammes 38 et 39, respectivement en $x$ et en $y$ (axes de coordonnées cartésiennes de la matrice 21 à 17 x 17 éléments de la Fig. 4), des vitesses V de la zone en déplacement (sur la Fig. 14, on a indiqué les éléments tels que $C_1$, $C_2$ de l'histogramme à enveloppe 38) ; $x_M$ et $y_M$ représentent les coordonnées en $x$ et en $y$ des maxima des deux enveloppes 38 et 39, respectivement, tandis que $l_a$ et $l_b$, pour l'axe des $x$ et $l_c$ et $l_d$, pour l'axe des $y$ représentent les limites du domaine des vitesses significatives ou intéressantes, $l_a$ et $l_c$ étant les limites inférieures et $l_b$ et $l_d$ les limites supérieures des portions significatives des histogrammes.

Les droites verticales $L_a$ et $L_b$, d'abscisses $l_a$ et $l_b$, et les droites horizontales $L_c$ et $L_d$, d'ordonnées $l_c$ et $l_d$, forment un rectangle qui encadre la zone hachurée 40 de vitesses significatives (pour l'ensemble des directions $x$ et $y$), quelques microzones 41, de vitesses plus faibles et dont on ne tiendra pas compte, existant au voisinage de la zone principale 40.

Il suffit donc de repérer les coordonnées des quatre limites $l_a$, $l_b$, $l_c$, $l_d$ et des deux maximas $x_M$ et $y_M$ pour caractériser la zone de plus grande variation du paramètre mis en histogramme, la vitesse V dans le cas particulier considéré. C'est cette information concernant V que le bloc 25 débite en sortie en permanence sur le micro-bus 23.

De même les blocs similaires 24, 26 et 27 débitent en sortie en permanence sur ce micro-bus 23 les informations concernant la zone de valeur maximale pour SR, DI et CO, respectivement.

Enfin les blocs similaires 28 et 29 débitent en sortie en permanence à l'unité 36 les informations concernant la zone de valeur maximale de $x(m)_1$ et $y(m)_1$ respectivement, l'unité 36 combinant ces informations d'abscisses et d'ordonnées, références $x(m)_2$ et $y(m)_2$ respectivement, en un signal composite $xy(m)$ qui est envoyé par la sortie de l'unité 36 sur le bus 23.

En définitive le bus 23 véhicule les informations concernant la zone de valeurs maximales de SR, V, DI, CO et $xy(m)$, c'est-à-dire $x(m)_1$ et $x(m)_2$, ce qui permet de déterminer l'existence d'une zone en déplacement dans la scène observée par la caméra vidéo 13, de localiser cette zone et d'en déterminer la vitesse et la direction (orientée) de déplacement.

Sur la Fig. 11 on a référencé ZH le signal composite de sortie disponible sur le bus 23. Les composantes précitées de ce signal ZH peuvent, notamment en ce qui concerne V et DI, c'est-à-dire la vitesse et la direction orientée de la zone en déplacement, être affichées sous forme numérique ou analogique, déclencher un signal lumineux et/ou sonore, notamment en cas de dépassement d'un seuil par la vitesse V, ou bien être transmis par câble, fibre optique ou voie hertzienne aux fins d'utilisation à distance, dans une unité de contrôle, telle que l'unité 10a de la Fig. 1, situé au voisinage ou à distance du dispositif 11 selon l'invention.

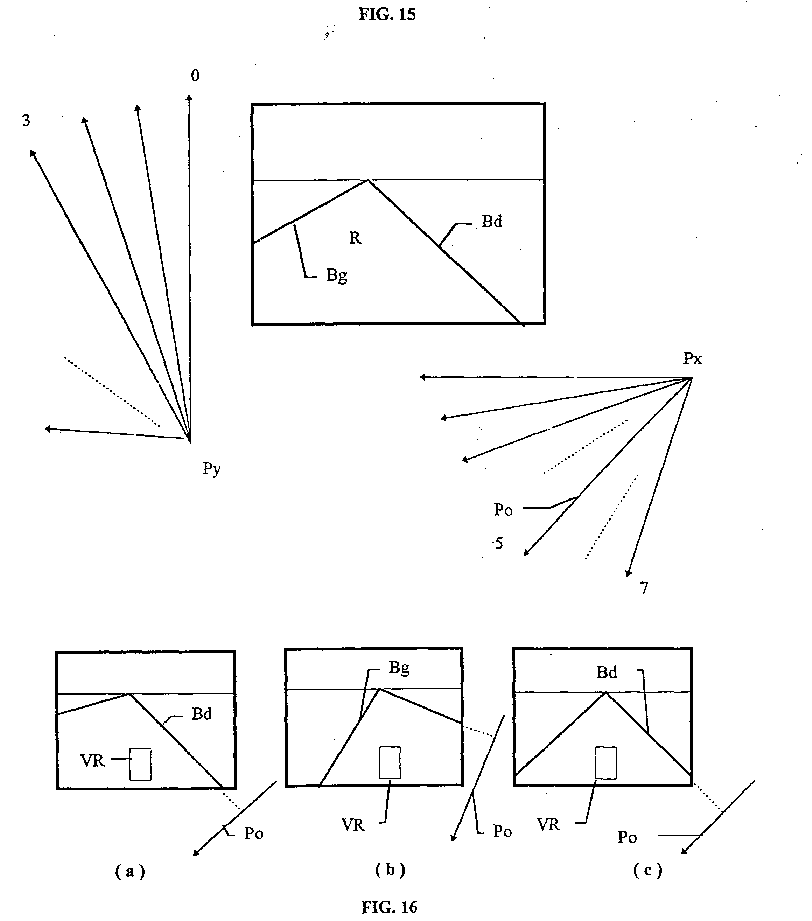

La portion des unités de la Fig. 12 au-dessus du bus 23 sert, à la suite du traitement point par point de toute une trame et l'association des points d'une trame pour en déduire une valeur globale externe, à déterminer l'existence et la localisation d'une zone de la scène observée en mouvement relatif et, en outre, s'il y a effectivement déplacement de cette zone, la vitesse et la direction orientée de ce déplacement. Le repérage dans le plan d'observation de cette zone en mouvement relatif suivant deux directions $x$, $y$, qui peuvent ne pas être orthogonales (cas de l'application des Fig. 15 et 16 par exemple) est réalisé par la portion des unités de la Fig. 12 au-dessous du bus 23.

On va maintenant exposer plus en détail, avec référence aux Fig. 12, 13 et 14, la structure et le fonctionnement d'un bloc de formation et traitement d'histogramme, tel que 25, et de son bloc de combinaison linéaire associé, tel que 31.

Le bloc 25 (Fig. 13) comporte une portion 25a formant l'histogramme et une portion 25b constituant un classifieur pour l'histogramme, ces deux portions fonctionnent sous le contrôle d'un logiciel, matérialisé en une portion de circuit intégré 25c, qui réalise l'extraction des limites $l_a$, $l_b$, $l_c$, $l_d$ de l'histogramme (Fig. 11).

Le classifieur 25b alimente, ainsi que les classifieurs des autres blocs de formation et traitement d'histogramme 24, 26, 27, 28, 29 (pour ces deux derniers à travers l'unité 36 de combinaison en $x(m)$ et $y(m)$ ), le bus 23 et, par l'intermédiaire de celui-ci, l'unité de combinaison linéaire 31 qui reçoit donc en parallèle des informations de tous les classifieurs des unités 24, 25, 26, 27, 28, 29 et qui, en fonction de ces informations, débite ou non le signal de validation $V_2$ à l'unité 25.

Grâce au logiciel de 25c, le classifieur 25b détermine les différentes classes (chacune comportant le même nombre de valeurs de la vitesse dans le cas envisagé) qui définiront l'enveloppe telle que 38 ou 39 (Fig. 12).

Sur la Fig. 14, on a illustré, suivant l'axe des $x$, les classes successives $C_1$, $C_2$ ... $C_{n-1}$, $C_n$ et leur enveloppe 38 pour la vitesse V qui sont déterminées dans le classifieur 25b.

Les Fig. 15 et 16 illustrent le rôle des histogrammes pour $x(m)$ et $y(m)$ formés par les unités 28 et 29 et combinés dans l'unité 36 afin d'obtenir une pente.

A titre d'exemple on a considéré le cas de l'observation d'une route au moyen d'une caméra vidéo à sortie numérique embarquée dans un véhicule avec son dispositif selon l'invention associé.

Sur la Fig. 15 a représenté les deux bords de gauche Bg et de droite $B_d$ d'une route R, ainsi que les pentes numérotées du 0 à 7 par exemple (suivant une convention autre que le code de Freeman) de la projection $P_x$ en $x(m)$ réalisée par l'unité 28 et de la projection $P_y$ en $y(m)$ réalisée par l'unité 29.

Pour assurer la précision la meilleure en ce qui concerne le bord de droite $B_d$, c'est-à-dire une sensibilité maximale des indications, par exemple de vitesse, concernant ce bord, il faut que la projection $P_x$ ait la pente la plus voisine de la pente optimale $P_0$ qui est perpendiculaire à $B_d$, en particulier la pente 5 dans la représentation de la Fig. 15. La valeur maximale de l'histogramme de vitesses sera donc obtenue pour la pente 5 déterminée par l'unité 28 (Fig. 11).

Le même raisonnement s'applique au bord gauche $B_g$ en ce qui concerne la pente de la projection Py et donc du rôle de l'unité 29.

L'unité 36 de combinaison des deux pentes optimales fournit l'information d'optimalisation pour l'ensemble des deux bords $B_d$ et $B_g$.

La Fig. 16 illustre l'application de la détermination de la pente optimale $P_o$ de la projection $P_x$, prise à titre d'exemple, pour assurer une conduite correcte d'un véhicule Vh en Europe continentale à conduite à droite de la route (cas a), au Royaume-Uni à conduite à gauche de la route (cas b) et enfin d'un avion Va pour un atterrissage correct au milieu de la piste d'un aéroport (cas c).

Par conséquent, pour aider la conduite d'un véhicule terrestre (auto, camion) sur une route ou d'un véhicule aérien (avion, navette spatiale) au voisinage d'une piste d'aéroport, le dispositif selon l'invention comporte en outre des moyens de représentation des bords droit B*d* et gauche B*g* de la route, respectivement de la piste, et des moyens pour orienter au moins un des axes, à pente variable, de coordonnées pour qu'il se maintienne sensiblement orthogonal au bord correspondant (position $P_0$).

Jusqu'à présent on a surtout décrit, les moyens pour déterminer une zone en déplacement effectif dans un environnement sensiblement immobile, grâce au repérage d'une région dans laquelle DP = 1. Pour déterminer une zone en repos dans un environnement dans l'ensemble en mouvement (cas de l'arrêt d'un véhicule en panne ou d'une collision sur une autoroute par exemple), c'est au contraire les zones dans lesquelles DP = 0 qui doivent être localisées par rapport à l'environnement pour lequel DP = 1. Bien entendu dans ce cas, les vitesses seront nulles dans une zone et la notion de direction n'a pas de signification. Les calculs dans 17a seront donc différents.

Le dispositif, selon l'invention, s'il ne doit servir qu'à déterminer une zone immobile peut être simplifié avec suppression des unités ou blocs traitant les vitesses et les directions, notamment les blocs 25, 26, 31, 32, et réduction du nombre des sorties de l'unité 11a et des entrées de l'unité 17.

Dans l'unité d'exploitation 10a du dispositif selon l'invention, on peut prévoir des moyens d'affichage, sur écran de moniteur, des histogrammes et/ou des valeurs des signaux DP ou CO.

Quant au signal SR, c'est-à-dire le signal vidéo numérique retardé, il est en général appliqué à un téléviseur ou moniteur 10 afin de visualiser, localement ou à distance sur l'écran de celui-ci, ce signal à l'instant où un mouvement relatif est signalé afin de vérifier la nature de ce mouvement relatif. Il suffira donc d'observer l'écran du téléviseur ou moniteur 10 uniquement lorsqu'une zone en déplacement relatif a été signalée, par une alarme visuelle et/ou sonore par exemple.

On peut avantageusement faciliter le repérage d'une zone en mouvement relatif sur l'écran en imposant des couleurs arbitraires au signal vidéo numérique retardé SR, chaque couleur ou nuance de couleur représentant une vitesse et/ou une direction du mouvement.

Les différentes unités qui viennent d'être décrites avec référence aux Fig. 2, 3, 4, 11 et 13 sont réalisables chacune par des circuits électroniques de type connu, notamment des microprocesseurs effectuant des calculs et/ou des comparaisons ou utilisant : des signaux de balayage ; des mémoires ; des unités à retards ; des registres à décalage ; des unités formant des histogrammes linéaires et associant dans le plan de tels histogrammes ; des microbus.

La combinaison de ces circuits électroniques en unités 11a et 22a séparées ou en un ensemble 22 constitué par 11a et 22a peut être réalisée en deux circuits intégrés ou en un seul circuit intégré de très petite dimension, de l'ordre de 10 mm x 10 mm par exemple en technologie 0,7 $\mu$m, l'ensemble des deux unités intégrées interconnectées ou le circuit intégré unique étant connecté par son entrée à la sortie vidéo numérique d'une caméra vidéo ou autre dispositif d'observation et par leurs sorties à un ou plusieurs dispositifs d'utilisation sur place ou à distance. Dans une variante si on met en oeuvre seulement le dispositif simplifié de l'unité 11a, celui-ci, de préférence sous la forme d'un circuit intégré unique, est disposé entre ladite sortie numérique et un ou plusieurs dispositifs d'utilisation sur place ou à distance.

On va donner maintenant à titre d'exemples, nullement limitatifs, des applications supplémentaires d'un dispositif selon l'invention, notamment du dispositif selon les Fig. 1 et 10, c'est-à-dire selon l'ensemble des Fig. 2 et 11 raccordées suivant la ligne Z - $Z^1$.

Une première application supplémentaire, illustrée sur la Fig. 17, est constituée par le cadrage automatique d'une personne se déplaçant dans une pièce, par exemple dans le cadre d'une vidéoconférence. Le cadrage automatique permet d'éliminer les mouvements de la personne se déplaçant, ce qui accroît la définition de l'image de cette personne observée par une caméra vidéo à sortie numérique et aussi, en cas de compression du signal vidéo numérique, simplifie cette compression.

Sur la Fig. 17, on retrouve la caméra vidéo 13 qui observe la personne P pouvant se déplacer. Le signal vidéo numérique S de la caméra vidéo est non seulement transmis par câble, fibre optique ou voie hertzienne à un écran de téléviseur ou moniteur 10b, mais également reçu par le dispositif 11 selon l'invention, dont la sortie ZH agit sur une unité 42 qui, en réponse aux signaux reçus du dispositif 11 concernant la localisation et le déplacement de la personne P, commande les moteurs 43 de la caméra 13 pour diriger l'axe optique de la caméra vers la personne, notamment son visage F, en fonction de la localisation de son mouvement et de la vitesse et de la direction de celui-ci et éventuellement pour agir sur le réglage du zoom, de la distance focale et/ou de la mise au point de la caméra en cas d'avance ou du recul de la personne P.

On peut aussi commander le suivi par au moins un spot lumineux d'un personnage (acteur, chanteur) sur une scène, le dispositif selon l'invention centrant le personnage au centre de l'image par déplacement de l'orientation de la caméra vidéo et commandant la direction du spot, par exemple par un ou deux miroirs orientables, pour chaque spot.

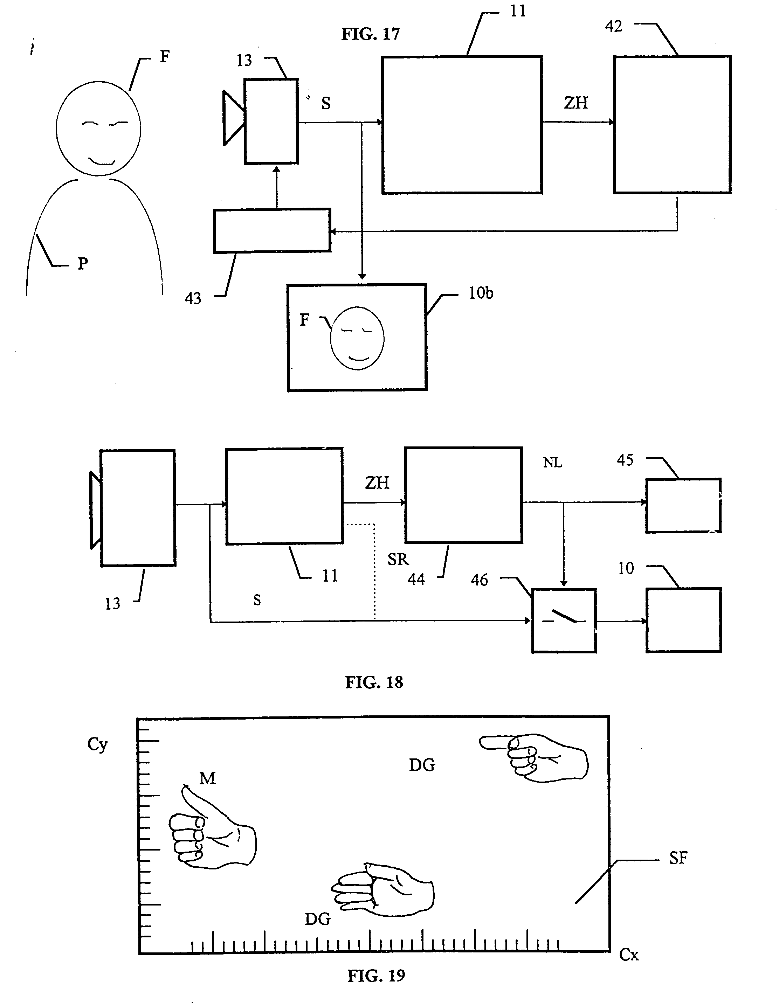

Une autre application, donnée à titre d'exemple, du dispositif selon invention est illustrée sur la Fig. 18 sur laquelle on retrouve la caméra 13 ou autre dispositif d'observation qui débite un signal vidéo numérique S dans un dispositif 11 selon invention. Dans cette application, la caméra 13 surveille une portion d'autoroute afin de détecter l'arrêt inopiné d'un véhicule, en particulier sur la bande d'arrêt d'urgence, ou un arrêt de voiture à la suite d'une collision.

Il s'agit donc dans ce cas de déterminer l'immobilité d'un objet (le véhicule) dans un environnement en déplacement (les autres véhicules), c'est-à-dire de localiser dans la matrice 21 à 17 x 17 éléments la zone dans laquelle DP = 0. Normalement la caméra 13 observe un flot des véhicules qui produisent des réponses DP = 1, avec des valeurs de vitesse et de direction de déplacement. Par contre, si un véhicule s'arrête, il est signalé par une réponse DP = 0 dans sa zone d'observation.

Une unité 44 recevant ZH, ainsi que SR, détecte l'apparition d'une zone dans laquelle DP = 0 dans ZH et débite en sortie un signal d'anomalie NL qui, d'une part, déclenche une alarme sonore et/ou lumineuse dans un dispositif 45 et, d'autre part, commande un commutateur 46 qui applique le signal vidéo S (ou plutôt le signal vidéo retardé SR) sur l'écran d'un téléviseur ou moniteur 10 qui permet au surveillant, alerté par l'alarme sonore et/ou visuelle, d'observer l'autoroute à l'instant où un véhicule s'arrête ou de collision afin de pouvoir prendre les mesures nécessaires, par exemple suivant la réaction de conducteur du véhicule qui s'est arrêté.

Grâce à l'invention, dans un poste de surveillance, un surveillant peut facilement contrôler un grand nombre de tronçons sur une autoroute (ou une route) dans chacun desquels est disposé une caméra 13 et un dispositif 11 selon l'invention, les sorties ZH et SR de chaque dispositif 11 étant transmises par câble, fibre optique ou voie hertzienne à un seul poste de surveillance où se trouve une unité commune 44 ; en effet l'observateur n'a besoin de regarder l'écran de 10 qu'en cas d'incident ou accident, signalé par l'alarme, et il est rare que plusieurs incidents et/ou accidents en des emplacements différents se produisent simultanément.

En particulier l'unité 44 peut comporter, en entrée, un commutateur de type rotatif (non représenté) envoyant successivement et cycliquement les signaux ZH (et SR) des différents ensembles 13 - 11 disposés le long de l'autoroute sur la portion de cette unité 44 produisant le signal NL.

Le même système permet de déceler non seulement, comme indiqué, l'arrêt, ou la collision entraînant un arrêt de véhicules, mais également un ralentissement du flot des véhicules (en cas de circulation très ralentie) par diminution de la vitesse dans les différentes zones dans lesquelles D = 1 et inversement un véhicule à vitesse excessive, la vitesse dans une zone observée dépassant alors la vitesse limitée autorisée.

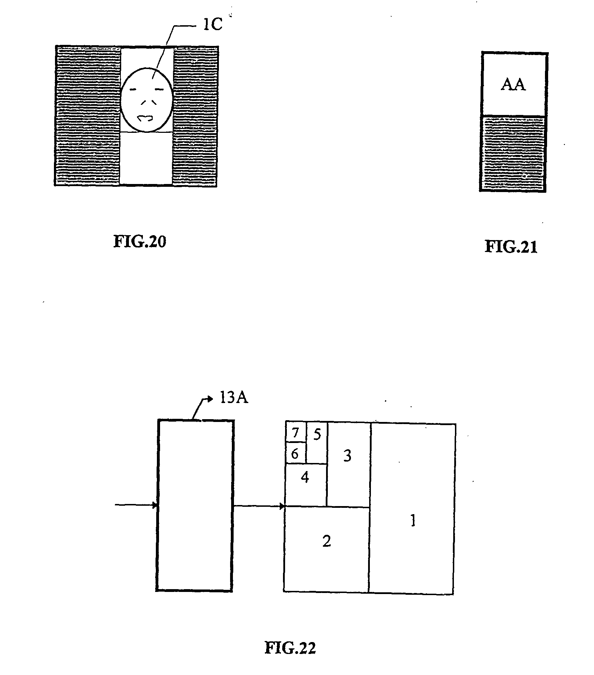

Enfin sur la Fig. 19 on a illustré une autre application de l'invention, à savoir à l'interaction homme - machine, le déplacement de la main M, ou plus particulièrement des doigts DG, à l'intérieur d'une surface SF décomposée en rectangles par un système de coordonnées $C_x$ et $C_y$.

Une caméra vidéo 13 à sortie numérique associée à un dispositif 11 selon l'invention, tel qu'illustré sur la Fig. 1, permet de reconnaître le mouvement d'une main M et des doigts DG et de l'utiliser pour contrôler un ordinateur (à la manière d'une «souris») ou pour commander certaines fonctions dans une machine. Par exemple l'ensemble 13 - 11 pourrait servir à un sourd-muet, utilisant le code standard du langage des sourds-muets à base de mouvements des mains, pour entrer en ordinateur des données alphanumériques, donc un texte, sans avoir à utiliser le clavier habituel ; cette opération peut, bien entendu être également effectuée par une personne parlante, ayant appris le langage des sourds-muets, afin d'entrer un texte en ordinateur sans avoir à utiliser un clavier. Un tel système n'est pas sensible aux écarts temporels et n'exige pas une signalisation précise du début et de la fin du geste.

Les Fig. 20 et 21 illustrent schématiquement l'application de l'invention à la surveillance d'un conducteur automobile afin de signaler l'endormissement de celui-ci.

La caméra vidéo 13 est dans ce cas placée contre la portion de carrosserie à l'intérieur du véhicule, au-dessus du rétroviseur par exemple, et observe le conducteur.

L'opération préliminaire consiste à cadrer celui-ci comme dans le cas de l'application de la Fig. 17. Sur la Fig. 20, on a représenté symboliquement l'image 1C du conducteur sur l'écran vidéo. On supprime d'abord les portions inutiles de droite et de gauche (hachures horizontales de l'image et on se limite ainsi à la portion centrale de l'image entre ces deux portions.

Ensuite dans cette portion centrale il suffit de surveiller la zone non hachurée AA de la Fig. 21 dans laquelle est cadrée la tête.

Les déplacements intéressants qui sont détectés par le dispositif selon l'invention sont constituées par les clignements des paupières du conducteur (signalés par des mouvements verticaux dans la zone AA) dont la cadence se modifie en préliminaire à l'endormissement. Si la cadence ou et la vitesse de ces clignements devient inférieure à un certain seuil, une alarme sonore est déclenchée et le conducteur est réveillé.

Sur la Fig. 22, on a indiqué un moyen pour pallier, lorsque cela est nécessaire, au nombre limité de bits *p* représentatifs de la constante de temps CO pour permettre de prendre en compte une plus large gamme de vitesses de déplacement.

A cet effet on prévoit l'utilisation du diagramme de Mallat (voir article de S. Mallat «A Theory for multiresolution signal decomposition» in IEEE Transactions on Pattern Analysis and Machine Intelligence, Juillet 1989 p. 674-693). qui consiste à décomposer successivement la totalité de l'image vidéo en moitié successives, repérées 1, 2, 3, 4, 5, 6, 7. On réalise ainsi une compression en ne traitant que des portions d'images. On peut ainsi avec $p = 4$, c'est-à-dire $2^P = 16$ déterminer une vitesse dans une gamme plus étendue.

Si au début, dans le cadre de l'image totale, le dispositif selon invention indique que la vitesse de l'objet (au sens large) mobile dépasse la vitesse maximale déterminable avec $2^P = 16$ pour la constante de temps, il suffit de passer successivement par les images partielles observées 1, 2, 3, 4,... jusqu'à ce que la vitesse de l'objet mobile ne dépasse pas ladite vitesse maximale dans le cadre de l'image partielle après compression.

Pour mettre en oeuvre la composition de Mallat par ondelettes, il suffit d'intercaler sur le schéma de la Fig. 1 une unité 13A (illustrée sur la Fig. 22) qui réalise cette compression du signal vidéo. Cette unité peut par exemple être constituée par le composant «ADV 601 Low Cost Multiformat Vidéo Codec» de la société américaine ANALOG DEVICES faisant l'objet de la notice «ADV 601 Preliminary Data Sheet» de Janvier 1996. Sur la Fig. 2, une telle unité de compression optionnelle 13a.

Enfin sur les Fig. 2 et 3, on a indiqué sur certains microbus le nombre de bits (1, 3 (dans le cas où $p = 3$), 8, 15) véhiculés, ce qui montre l'économie de taille possible pour les différents blocs fonctionnels ayant à traiter un nombre réduit de bits.

On voit en définitive que l'invention permet de détecter un mouvement relatif dans une scène observée par un dispositif optoélectronique, tel qu'une caméra vidéo, qui transmet la scène observée sous la forme d'un signal vidéo numérique constitué par une succession de trames, elles-mêmes constituées par une succession de lignes composées d'une succession de pixels, ce signal numérique étant analysé afin de repérer une zone en déplacement relatif, avec indication de la vitesse et de la direction (orientée) de ce déplacement si la zone est en mouvement effectif par rapport à un environnement sensiblement immobile.

Etant donné que le dispositif selon l'invention détermine la direction orientée et la vitesse de déplacement d'un objet (au sens le plus large), on peut lui adjoindre des moyens pour déduire de ces deux parametres une position future de l'objet à un instant déterminé et des moyens pour orienter d'avance la caméra vidéo d'entrée 13 sur cette position future.

Il y a lieu de noter que les résultats obtenus avec le dispositif selon invention n'exigent nullement que la caméra soit immobile, ce qui permet d'embarquer la caméra et le dispositif associé sur un véhicule terrestre, aérien ou nautique (pour la mise en oeuvre du procédé illustré sur la Fig. 16 par exemple).

Après une très courte période d'initialisation égale à N (de l'ordre de moins de dix trames successives correspondantes), le dispositif selon l'invention détermine les paramètres du déplacement relatif instantanément après la fin de chaque trame ayant subi les traitements temporel et spatial, du fait de la récursivité des calculs selon l'invention.

On a décrit un mode de réalisation préféré du dispositif selon l'invention et quelques applications de celui-ci. Bien entendu ce mode de réalisation et ces applications ont été donnés à titre d'exemples non limitatifs et de nombreuses variantes et adaptations, qui apparaîtront facilement à l'homme de l'art, peuvent être envisagées sans sortir du cadre de l'invention tel que défini dans les revendications ci-après.

On pourrait par exemple mettre en oeuvre des moyens d'utilisation des signaux débités par l'unité 11 de la Fig. 2 autres que ceux illustrés sur la Fig. 11 sans s'écarter de l'invention.

Quant aux applications d'un dispositif selon l'invention, elles ne sont nullement limitées à celles données à titre d'exemple dans la description précitée. Ainsi un montage analogue à celui de la Fig. 17 peut être associé directement à un caméscope pour le stabiliser relativement aux déplacements causés par les mouvements involontaires de l'utilisateur.

On peut également utiliser un ou, de préférence, plusieurs dispositifs, selon l'invention, associés respectivement à un ou, de préférence, plusieurs caméscopes à sortie vidéo numérique placés dans une pièce d'immeuble pour constituer une «pièce intelligente» grâce à un tel système permettant de détecter et localiser la présence et le mouvement d'une ou plusieurs personnes dans la pièce, d'analyser ce mouvement, aux fins de sécurité, d'identification et/ou pour aider dans les tâches à accomplir, par exemple, ou à surveiller des enfants dans une autre pièce ou les clients d'un supermarché.

On a supposé essentiellement l'utilisation d'un signal vidéo à paires de trames entrelacées successives, notamment lors de la discussion de la capacité de la mémoire 16, avec traitement des deux trames d'une paire dans le dispositif selon l'invention. Il est toutefois possible de n'utiliser qu'une trame sur deux (l'impaire par exemple) en réduisant la capacité de la mémoire, mais avec réduction de moitié environ de la vitesse d'obtention des informations désirées. Il est également possible de mettre en oeuvre une camera vidéo ou autre dispositif d'observation dont la sortie numérique ne comporte qu'une seule trame par image.

Il est possible, dans certaines applications d'associer, au dispositif selon l'invention, des capteurs spécialisés, par exemple un ou plusieurs capteurs d'accélération, pour pouvoir traiter des parametres supplémentaires du déplacement.

Bien entendu l'invention n'est pas limitée aux modes de réalisation particulières ni aux applications décrits, mais elle en embrasse toutes les variantes et modifications entrant dans la définition générale de l'invention.

**Revendications**

1. Procédé, opérant en temps réel, pour le repérage et la localisation d'une zone en mouvement relatif dans une scène observée par un système d'observation à sortie constituée par un signal vidéo numérique du type comportant, d'une manière classique, une succession de trames correspondantes de même nature, chacune composée d'une succession de lignes, composées chacune d'une succession de pixels, ainsi que pour la détermination de la vitesse et de la direction orientée du mouvement de déplacement relatif, ledit procédé
consistant à effectuer sur ledit signal vidéo numérique successivement

   - un traitement temporel qui consiste, pour chaque position de pixel, à déterminer la différence entre l'amplitude du signal de pixel dans la trame actuelle et l'amplitude d'un signal de pixel représentatif de ses valeurs dans les trames antérieures, et
   - un traitement spatial, qui consiste, pour chaque trame dudit signal vidéo numérique, à répartir, en une matrice à nombre de lignes et nombre de colonnes réduits par rapport respectivement au nombre de lignes et au nombre de pixels par ligne dans ledit signal vidéo numérique, uniquement les valeurs, au même instant d'observation, pour une fraction des pixels d'une trame - fraction qui défile par balayage à travers ladite matrice pendant la durée d'une trame -, des signaux représentatifs des variations des valeurs de pixels et à déduire, à partir de l'ensemble des représentations matricielles relatives à un instant d'observation donné, c'est-à-dire à une trame donnée dudit signal vidéo ou numérique, la localisation d'une zone éventuelle en mouvement relatif et l'estimation de ce mouvement s'il existe,

   et étant **caractérisée en ce que**

   - il comporte un double traitement préliminaire consistant en

     • un lissage adaptatif dudit signal vidéo numérique en mettant en oeuvre une constante de temps numérique dont la valeur numérique, pour chacun des pixels dudit signal vidéo numérique et indépendamment pour chacun d'eux, est modifiée en réponse à la variation ou non variation temporelle de la valeur du pixel, et
     • à une mise en mémoire d'une trame entière dudit signal de sortie après lissage, d'une part, et de ladite constante de temps pour chaque position de pixel de ladite trame, d'autre part;

   - ledit traitement temporel consiste, pour chaque position de pixel, à déterminer l'existence, d'une part, et l'amplitude, d'autre part, d'une variation significative éventuelle de l'amplitude du signal de pixel entre la trame actuelle et la trame juste antérieure lissée, mise en mémoire, et à générer deux signaux numériques , le premier étant un signal binaire, donc monobit, à deux valeurs possibles dont la première représente l'existence d'une telle variation significative et la seconde l'absence d'une telle variation significative entre les deux dites trames actuelle et juste antérieure lissée, la valeur dudit signal binaire modifiant la valeur mémorisée de ladite constante de temps pour le pixel en cause afin respectivement de la diminuer si ledit signal binaire a ladite première valeur et de l'augmenter si ledit signal binaire a ladite seconde valeur, la diminution ou l'augmentation étant réalisée d'une manière quantifiée, tandis que le second signal numérique, dit d'amplitude, est un signal multibits, à nombre limité de bits, quantifiant l'amplitude, de cette variation; et
   - ledit traitement spatial consiste, pour chaque trame dudit signal vidéo de sortie,

     • à répartir, en ladite matrice et pendant la durée d'une trame, ledit signal binaire, d'une part, et ledit signal numérique d'amplitude, d'autre part,

à déterminer, dans cette double représentation matricielle instantanée dudit signal binaire et dudit signal numérique d'amplitude pour le même pixel, une zone particularisée, dans laquelle à la fois ledit signal binaire a la valeur recherchée représentant la présence, ou respectivement l'absence, de variation significative et ledit signal numérique d'amplitude varie, ou respectivement ne varie pas, d'une valeur significative entre pixels voisins dans ladite matrice suivant une direction orientée à partir d'un pixel d'origine, et ceci pour une même portion de trame, donc à un même instant d'observation, et

- à engendrer des signaux représentatifs de l'existence et de la localisation de la zone de déplacement relatif éventuel, de la valeur de la vitesse relative inter-trames et de la direction orientée parmi plusieurs directions orientées possibles dans le plan d'observation, de ce déplacement relatif éventuel, dans son environnement, à partir de ladite répartition matricielle instantanée de ces deux signaux, binaire et d'amplitude.

2. Procédé selon la revendication 1, **caractérisé en ce qu'**il consiste, en outre:

   - à former les histogrammes des valeurs des signaux répartis matriciellement, d'une part, et les histogrammes de valeurs des inclinaisons de deux axes, à pente variable, de coordonnées dans un plan, d'autre part,
   - à repérer, dans chaque histogramme formé, un domaine de variation significative de la valeur traitée et
   - à déduire, de chaque domaine repéré, l'existence et la localisation, ainsi que la vitesse et la direction orientée, d'une zone en mouvement relatif.

3. Procédé selon la revendication 1 ou 2, **caractérisé en ce que** ladite matrice est une matrice carrée à même nombre impair (2/ + 1) de lignes et de colonnes, et que l'on considère les matrices emboîtées de 3 x 3, 5 x 5, 7 x 7, ...(2/ + 1) x (2/ + 1) éléments centrées sur le centre de cette matrice carrée afin de déterminer la matrice emboîtée de plus petite taille dans laquelle ledit signal numérique varie dans une direction orientée à partir dudit centre, la valeur dudit signal binaire représentant un dépassement du seuil selon cette direction.

4. Procédé selon la revendication 1 ou 2, **caractérisé**

en ce que ladite matrice est une matrice hexagonale et que l'on considère les matrices hexagonales emboîtées de taille croissante centrées sur le centre de cette matrice hexagonale afin de déterminer la matrice emboîtée de plus petite taille dans laquelle ledit signal numérique varie dans une direction orientée à partir dudit sommet, la valeur dudit signal binaire représentant un dépassement du seuil selon cette direction.

5. Procédé selon les revendications 1 ou 2, **caractérisé en ce que** ladite matrice est une matrice en L renversé à une seule ligne et une seule colonne et **en ce que** l'on considère les matrices emboîtées de 3 x 3 pixels, 5 x 5 pixels, 7 x 7 pixels....(2/ + 1) x (2/ + 1) pixels, pour la ligne et la colonne uniques, afin de déterminer la matrice de plus petite taille dans laquelle le signal varie dans une direction orientée, à savoir la ligne de plus grande pente à quantification constante.

6. Procédé selon l'une quelconque des revendications précédentes, **caractérisé en ce que** ladite constante de temps est de la forme $2^p$, p étant un nombre inférieur à 16, pouvant donc être exprimé par pas plus de 4 bits, la diminution ou l'augmentation de la constante de temps étant réalisée par la soustraction ou l'addition d'une unité à *p*.

7. Procédé selon la revendication 6, **caractérisé en ce que** l'on considère des portions successives décroissantes de trames complètes suivant l'algorithme temps - échelle de Mallat et sélectionne la plus grande de ces portions, qui donne des indications de déplacement, vitesse et orientation, compatible avec la valeur de *p*.

8. Dispositif, fonctionnant en temps réel, pour le repérage et la localisation d'une zone en mouvement relatif dans une scène observée, ainsi que pour la détermination de la vitesse et de la direction orientée du mouvement de déplacement relatif, par mise en oeuvre du procédé selon la revendication 1, comportant:

   - un système d'observation à sortie constituée par un signal vidéo numérique du type comportant, d'une manière classique, une succession de trames correspondantes de même nature, chacune composée d'une succession de lignes, composées chacune d'une succession de pixels,
   - un ensemble de traitement temporel déterminant, pour chaque position de pixel, la différence entre l'amplitude du signal de pixel dans la trame actuelle et l'amplitude d'un signal de pixel représentatif de ses valeurs dans les trames antérieures,

- un ensemble de traitement spatial qui, pour chaque trame dudit signal vidéo numérique, répartit en une matrice à nombre de lignes et nombre de colonnes réduits par rapport respectivement au nombre de lignes et au nombre de pixels par ligne dans ledit signal vidéo numérique, uniquement les valeurs, au même instant d'observation, pour une fraction des pixels d'une trame - fraction qui défile par balayage à travers ladite matrice pendant la durée d'une trame -, des signaux représentatifs des variations des valeurs de pixels, et qui déduit, à partir de l'ensemble des représentations matricielles relatives à un instant d'observation donné, c'est-à-dire à une trame donnée dudit signal vidéo numérique, la localisation d'une zone éventuelle en mouvement relatif et l'estimation de ce mouvement s'il existe,

et étant **caractérisée en ce qu'**il comporte en combinaison:

- des moyens de lissage adaptatif (15) dudit signal vidéo numérique en mettant en oeuvre une constante de temps numérique (CO) dont la valeur numérique, pour chacun des pixels dudit signal vidéo numérique et indépendamment pour chacun d'eux, est modifiée en réponse à la variation ou non variation temporelle de la valeur du pixel;
- des moyens de mémorisation (16) pour une trame entière dudit signal de sortie après lissage (LI), d'une part, et de ladite constante de temps pour chaque position de pixel de ladite trame, d'autre part;
- dans l'ensemble de traitement temporel (15),

  • des moyens de comparaison (15) pour déterminer l'existence, d'une part, et l'amplitude, d'autre part, d'une variation significative éventuelle de l'amplitude du signal de pixel entre la trame actuelle et la trame juste antérieure lissée, mise en mémoire, et pour générer un premier signal numérique (DP), qui est un signal binaire, donc monobit, à deux valeurs possibles dont la première représente l'existence d'une telle variation significative et la seconde l'absence d'une telle variation significative entre les deux dites trames actuelle et juste antérieure lissée, la valeur dudit signal binaire modifiant la valeur mémorisée de ladite constante de temps pour le pixel en cause afin respectivement de la diminuer si ledit signal binaire a ladite première valeur et de l'augmenter si ledit signal binaire a ladite seconde valeur, la diminution ou l'augmentation étant réalisée d'une manière quantifiée, et
  • des moyens de calcul (15c) aptes à générer un second signal numérique (CO), dit d'amplitude, qui est un signal multibits, à nombre limité de bits, quantifiant l'amplitude de cette variation; et

- dans l'ensemble de traitement spatial (11), dont les entrées reçoivent de ladite unité de traitement lesdits signaux numériques, binaire et d'amplitude, successifs pour les pixels d'une même trame:

  • des moyens pour répartir, en ladite matrice (21) et pendant la durée d'une trame, ledit signal binaire, d'une part, et ledit signal numérique d'amplitude, d'autre part,
  • des moyens pour déterminer, dans cette double représentation matricielle instantanée dudit signal binaire et dudit signal numérique d'amplitude pour le même pixel, une zone particularisée, dans laquelle à la fois ledit signal binaire a la valeur recherchée représentant la présence, ou respectivement l'absence, de variation significative et ledit signal numérique d'amplitude varie, ou respectivement ne varie pas, d'une valeur significative entre pixels voisins dans ladite matrice suivant une direction orientée à partir d'un pixel d'origine, et ceci pour une même portion de trame, donc à un même instant d'observation, et
  • des moyens pour engendrer des signaux représentatifs de l'existence et de la localisation de la zone de déplacement relatif éventuel, de la valeur de la vitesse relative inter-trames et de la direction orientée parmi plusieurs directions orientées possibles dans le plan d'observation, de ce déplacement relatif éventuel, dans son environnement, à partir de ladite répartition matricielle instantanée de ces deux signaux, binaire et d'amplitude.

**9.** Dispositif selon la revendication 8, **caractérisé en ce que** l'ensemble de traitement spatial (17, 18) comporte des premiers moyens de retard ( r ) en cascade dont chacun impose un retard égal à l'écart temporel entre deux lignes successives et des seconds moyens de retard (d) en cascade pour chaque ligne imposant chacun un retard égal à l'écart temporel entre deux pixels successifs d'une ligne, les sorties de chacun desdits seconds moyens de retard (d) et l'entrée de la cascade desdits seconds moyens de retard (d) de chaque ligne débitant à un instant donné les valeurs dudit signal binaire et dudit signal numérique d'amplitude, à un même instant, vers lesdits moyens de repérage (17a).

**10.** Dispositif selon la revendication 8 ou 9, **caractérisé en ce qu'**il comporte également des moyens (24-29) formant les histogrammes des valeurs de sortie de ladite unité de traitement spatial, ainsi que les histogrammes des inclinaisons de deux axes, à pente variable, de coordonnées dans un plan, des moyens pour repérer, dans chaque histogramme, un domaine de variation significative de la valeur traitée, afin de valider ce domaine en leur sortie et de déduire, pour l'ensemble des histogrammes, des signaux de sortie qui signalent et localisent une zone de la scène observée en mouvement relatif, si elle existe, ainsi que la vitesse et la direction orientée de ce mouvement si ladite zone se déplace effectivement par rapport à son environnement.

**11.** Dispositif selon la revendication 8, 9 ou 10, **caractérisé en ce que** lesdits moyens de lissage (15c, 15d) comportent une entrée qui reçoit ledit signal vidéo numérique S (PI) et calculent, pour les pixels successifs d'une trame de ce signal vidéo, un signal lissé (LO), dans lequel les variations temporelles du signal vidéo numérique d'entrée sont diminuées, par mise en oeuvre d'un signal de seuil (N) reçu sur une autre entrée et d'une constante de temps (CO) relative à chaque position de pixel d'une trame, dont la valeur est successivement modifiée afin que le lissage conserve, tout en la réduisant, la tendance de variation du signal vidéo numérique entrant, ces moyens de lissage coopérant avec l'unité de mémoire (16) qui reçoit, stocke et restitue les valeurs actualisées, pour chaque position de pixel d'une trame, du signal lissé et de ladite constante de temps et débitent, sur leurs sorties, au moins la succession, pour chaque position de pixel, des valeurs de la constante de temps actualisée et des valeurs d'un signal binaire de dépassement ou non-dépassement dudit seuil par la valeur absolue de la différence entre la valeur du pixel et sa valeur lissée.

**12.** Dispositif selon l'une quelconque des revendications 8 à 11, **caractérisé en ce que** ladite unité de traitement spatial (17, 18) réalisant la répartition matricielle, par lignes et par colonnes en nombre réduit, des sorties desdits moyens de lissage, à savoir des valeurs successives de la constante de temps (CO) et dudit signal binaire, comporte des moyens de repérage (17a) pour repérer, dans ladite répartition matricielle, une zone de pixels dans laquelle, à la fois, soit la valeur dudit signal binaire correspond à un dépassement de seuil et ladite constante de temps varie entre pixels voisins d'une valeur significative dans une direction, et pour produire des signaux de sortie indiquant la localisation de ladite zone et la vitesse et la direction orientée du déplacement dans ladite zone, soit la valeur dudit signal binaire correspond à un non-dépassement du seuil et ladite constante de temps ne varie pas entre pixels voisins.

**13.** Application du dispositif selon la revendication 10, 11 ou 12, pour aider la conduite d'un véhicule terrestre sur une route, respectivement d'un véhicule aérien au voisinage d'une piste d'aéroport, **caractérisé en ce que** le dispositif comporte en outre des moyens de représentation des bords droit Bd et gauche Bg de la route, respectivement de la piste, et des moyens pour orienter au moins un des axes, à pente variable, de coordonnées pour qu'il se maintienne sensiblement orthogonal au bord correspondant (position Po).

**14.** Application du dispositif-selon l'une quelconque des revendications 8 à 12, pour surveiller l'état de vigilance du conducteur d'un véhicule automobile, afin de détecter une tendance éventuelle à la somnolence de celui-ci, consistant à:

- générer un signal vidéo numérique représentant

  • initialement les images successives de la face du conducteur et
  • ensuite, d'une manière continue et en temps réel, les images successives de seulement les yeux du conducteur;

- traiter ledit signal vidéo relatif seulement aux yeux, du conducteur afin de, successivement et en temps réel,

  • détecter, dans lesdites images de seulement les yeux, les mouvements verticaux des paupières représentant le clignement de celles-ci,
  • déterminer les cadences successives de ces mouvements et
  • détecter les cadences qui sont inférieures à un seuil de clignement des paupières qui correspond à la transition entre l'état éveillé et l'état de somnolence du conducteur, et

- déclencher un signal d'alarme apte à alerter le conducteur dès que lesdites cadences franchissent ledit seuil.

**Patentansprüche**

**1.** Verfahren, das im Echtzeitmodus arbeitet und zur Erfassung und Lokalisierung einer in relativer Bewegung befindlichen Zone in einer Szene eingesetzt wird, die von einem Beobachtungssystem mit einem Ausgang beobachtet wird, der von einem digitalen Videosignal gebildet ist, umfassend herkömmlicherweise eine Aufeinanderfolge von entsprechenden Rastern derselben Natur, wobei jedes aus einer Aufeinanderfolge von Zeilen gebildet wird, die jeweils aus einer Aufeinanderfolge von Pixeln gebildet wird, sowie zur Bestimmung der Geschwindigkeit und der Ausrichtung der relativen Verschiebebewegung eingesetzt wird, wobei das Verfahren
darauf beruht, auf dem digitalen Videosignal nacheinander durchzuführen

- eine zeitliche Bearbeitung, die für jede Pixelposition darin besteht, den Unterschied zwischen der Amplitude des Pixelsignals in dem aktuellen Raster und der Amplitude eines Pixelsignals, das für seine Werte in den vorherigen Rastern repräsentativ ist, zu bestimmen,

- eine räumliche Bearbeitung, die für jedes Raster des digitalen Videosignals darin besteht, in einer Matrix mit reduzierter Zeilen- und Spaltenzahl im Vergleich mit der Zeilen- bzw. Pixelzahl pro Zeile in dem digitalen Videosignal nur die Werte zu demselben Beobachtungszeitpunkt für einen Bruchteil der Pixel eines Rasters - Bruchteil, der durch Abfragen über die Matrix während der Dauer eines Rasters abläuft - der Signale zu verteilen, die für die Änderungen der Pixelwerte repräsentativ sind, und von der Gesamtheit der Matrixdarstellungen in bezug auf einen gegebenen Beobachtungszeitpunkt, d.h. ein gegebenes Raster des Videosignals oder digitalen Signals, die Lokalisierung einer eventuellen, in relativer Bewegung befindlichen Zone und die Bewertung dieser Bewegung, falls vorhanden, abzuleiten,

und **dadurch gekennzeichnet ist, daß**

- es eine doppelte Vorbearbeitung umfasst, bestehend in

einem adaptativen Glätten des digitalen Videosignals, indem eine digitale Zeitkonstante eingesetzt wird, deren digitaler Wert für jedes der Pixel des digitalen Videosignals und unabhängig für jedes von ihnen als Reaktion auf die zeitliche Änderung oder Nichtänderung des Werts des Pixels geändert wird, und

einer Speicherung eines ganzen Rasters des Ausgangssignals nach dem Glätten einerseits und der Zeitkonstante für jede Pixelposition des Rasters andererseits;

- die zeitliche Bearbeitung darin besteht, für jede Pixelposition das Vorhandensein einerseits und die Amplitude andererseits einer eventuellen signifikanten Veränderung der Amplitude des Pixelsignals zwischen dem aktuellen Raster und dem genau davorliegenden geglätteten und gespeicherten Raster zu bestimmen und zwei digitale Signale zu erzeugen, wobei das erste ein Binärsignal, somit ein Monobit-Signal, mit zwei möglichen Werten ist, von denen der erste das Vorhandensein einer solchen signifikanten Veränderung und der zweite das Fehlen einer solchen signifikanten Veränderung zwischen den beiden erwähnten Rastern, dem aktuellen und dem genau davorliegenden, geglätteten, darstellt, wobei der Wert des Binärsignals den gespeicherten Wert der Zeitkonstante für das betreffende Pixel verändert, um sie zu verringern, wenn das Binärsignal den ersten Wert aufweist, und um sie zu erhöhen, wenn das Binärsignal den zweiten Wert aufweist, wobei die Verringerung oder Erhöhung auf quantifizierte Weise erfolgt, während das zweite digitale Signal, Amplitude genannt, ein Multibit-Signal mit begrenzter Bitanzahl ist, das die Amplitude dieser Veränderung quantifiziert; und

- die räumliche Bearbeitung darin besteht, für jedes Raster des Ausgangsvideosignals,

in der Matrix und während der Dauer eines Rasters das Binärsignal einerseits und das digitale Amplitudensignal andererseits zu verteilen,

in dieser doppelten momentanen Matrixdarstellung des Binärsignals und des digitalen Amplitudensignals für dasselbe Pixel eine angepasste Zone zu bestimmen, in der sowohl das Binärsignal den gewünschten Wert aufweist, der dem Vorhandensein bzw. dem Fehlen einer signifikanten Veränderung entspricht, als auch das digitale Amplitudensignal sich um einen signifikanten Wert zwischen benachbarten Pixeln in der Matrix entlang einer Richtung ausgehend von einem Ausgangspixel verändert oder nicht, und zwar für ein und denselben Rasterabschnitt, somit zu demselben Beobachtungszeitpunkt, und

Signale zu erzeugen, die für das Vorhandensein und die Lokalisierung der eventuellen relativen Verschiebezone, für den Wert der relativen Zwischenrastergeschwindigkeit und die Ausrichtung unter mehreren möglichen Ausrichtungen in der Beobachtungsebene dieser eventuellen relativen Verschiebung in ihrem Umfeld, ausgehend von der momentanen Matrixverteilung dieser beiden Signale, des Binärsignals und des Amplitudensignals repräsentativ sind.

2. Verfahren nach Anspruch 1, **dadurch gekennzeichnet, daß** es ferner darin besteht:

   - die Histogramme der Werte der matrixmäßig verteilten Signale einerseits und die Histogramme von Werten der Neigungen von zwei Achsen mit variablem Gefälle von Koordinaten in einer Ebene andererseits zu bilden,

   - in jedem gebildeten Histogramm einen Bereich der signifikanten Veränderung des bearbeiteten Wertes zu erfassen, und

   - von jedem erfassten Bereich das Vorhandensein und die Lokalisierung sowie die Geschwindigkeit und die Ausrichtung einer in relativer Bewegung befindlichen Zone abzuleiten.

3. Verfahren nach Anspruch 1 oder 2, **dadurch gekennzeichnet, daß** die Matrix eine quadratische Matrix mit derselben ungeraden Anzahl (2/+1) aus Zeilen und Spalten ist und dass die Matrices von 3x3, 5x5, 7x7,... (2/+1)x(2/+1) Elementen geschachtelt angesehen werden, die auf dem Mittelpunkt dieser quadratischen Matrix zentriert sind, um die geschachtelte Matrix kleinerer Größe zu bestimmen, in der sich das digitale Signal in einer Ausrichtung, ausgehend vom Mittelpunkt verändert, wobei der Wert des Binärsignals eine Überschreitung der Schwelle in dieser Richtung darstellt.

4. Verfahren nach Anspruch 1 oder 2, **dadurch gekennzeichnet, daß** die Matrix eine Hexagonalmatrix ist und daß die Hexagonalmatrices mit steigender Größe geschachtelt auf dem Mittelpunkt dieser Hexagonalmatrix zentriert angesehen werden, um die geschachtelte Matrix kleinerer Größe zu bestimmen, in der sich das digitale Signal in einer Ausrichtung, ausgehend von der Spitze, verändert, wobei der Wert des Binärsignals eine Überschreitung der Schwelle entlang dieser Richtung darstellt.

5. Verfahren nach Anspruch 1 oder 2, **dadurch gekennzeichnet, daß** die Matrix eine Matrix in Form eines umgekehrten L mit einer einzigen Zeile und einer einzigen Spalte ist und daß die Matrices aus 3x3 Pixel, 5x5 Pixel, 7x7 Pixel ... (2/+1)x(2/+1) Pixel für die einzige Zeile und Spalte geschachtelt angesehen werden, um die Matrix kleinerer Größe zu bestimmen, in der sich das Signal in einer Ausrichtung verändert, nämlich in der Zeile mit größerem Gefälle mit konstanter Quantifizierung.

6. Verfahren nach einem der vorstehenden Ansprüche, **dadurch gekennzeichnet, daß** die Zeitkonstante die Form $2^P$ aufweist, wobei p eine Zahl kleiner als 16 ist und somit mit nicht mehr als 4 Bit ausgedrückt werden kann, wobei die Verringerung oder die Erhöhung der Zeitkonstante durch Subtraktion oder Addition einer Einheit zu *p* erfolgt.

7. Verfahren nach Anspruch 6, **dadurch gekennzeichnet, daß** aufeinanderfolgende abnehmende Abschnitte von kompletten Rastern gemäß dem Zeitalgorithmus - Mallat-Skala, angenommen werden und der größte dieser Abschnitte ausgewählt wird, der Angaben über die Verschiebung, Geschwindigkeit und Ausrichtung macht und mit dem Wert von p vereinbar ist.

8. Vorrichtung, die im Echtzeitmodus arbeitet und zur Erfassung und Lokalisierung einer in relativer Bewegung befindlichen Zone in einer beobachteten Szene sowie zur Bestimmung der Geschwindigkeit und der Ausrichtung der relativen Verschiebebewegung eingesetzt wird, durch Einsatz des Verfahrens nach Anspruch 1,
umfassend

   - ein Beobachtungssystem mit einem Ausgang, der von einem digitalen Videosignal gebildet wird, herkömmlicherweise umfassend eine Aufeinanderfolge von Zeilen, die jeweils von einer Aufeinanderfolge von Pixeln gebildet werden,

   - eine Einheit zur zeitlichen Bearbeitung, die für jede Pixelposition den Unterschied zwischen der Amplitude des Pixelsignals in dem aktuellen Raster und der Amplitude eines Pixelsignals, das für seine Werte in den vorherigen Rastern repräsentativ ist, bestimmt,

   - eine Einheit zur räumlichen Bearbeitung, die für jedes Raster des digitalen Videosignals in einer Matrix mit reduzierter Zeilen- und Spaltenzahl im Vergleich mit der Zeilen- bzw. Pixelzahl pro Zeile in dem digitalen Videosignal nur die Werte zu demselben Beobachtungszeitpunkt für einen Bruchteil der Pixel eines Rasters - Bruchteil, der durch Abfragen über die Matrix während der Dauer eines Rasters abläuft - der Signale verteilt, die für die Änderungen der Pixelwerte repräsentativ sind, und von der Gesamtheit der Matrixdarstellungen in bezug auf einen gegebenen Beobchtungszeitpunkt, d.h. ein gegebenes Raster des digitalen Videosignals, die Lokalisierung einer eventuellen in relativer Bewegung befindlichen Zone und die Bewertung dieser Bewegung, falls vorhanden, ableitet,

wobei die Vorrichtung **dadurch gekennzeichnet ist, daß** sie in Kombination umfasst:

- Mittel zum adaptativen Glätten (15) des digitalen Videosignals, indem eine digitale Zeitkonstante (CO) eingesetzt wird, deren digitaler Wert für jedes der Pixel des digitalen Videosignals und unabhängig für jedes von ihnen als Reaktion auf die zeitliche Änderung oder Nichtänderung des Werts des Pixels geändert wird,

- Mittel zur Speicherung (16) eines ganzen Rasters des Ausgangssignals nach dem Glätten (LI) einerseits und der Zeitkonstante für jede Pixelposition des Rasters andererseits;

- in der Einheit zur zeitlichen Bearbeitung (15)

  Vergleichsmittel (15), um das Vorhandensein einerseits und die Amplitude andererseits einer eventuellen signifikanten Veränderung der Amplitude des Pixelsignals zwischen dem aktuellen Raster und dem genau davorliegenden, geglätteten und gespeicherten Raster zu bestimmen und ein erstes digitales Signal (DP) zu erzeugen, welches ein Binärsignal, somit ein Monobit-Signal, mit zwei möglichen Werten ist, von denen der erste das Vorhandensein einer solchen signifikanten Veränderung und der zweite das Fehlen einer solchen signifikanten Veränderung zwischen den beiden erwähnten Rastern, dem aktuellen und dem genau davorliegenden, geglätteten, darstellt, wobei der Wert des Binärsignals den gespeicherten Wert der Zeitkonstante für das betreffende Pixel verändert, um sie zu verringern, wenn das Binärsignal den ersten Wert aufweist, und um sie zu erhöhen, wenn das Binärsignal den zweiten Wert aufweist, wobei die Verringerung oder Erhöhung auf quantifizierte Weise erfolgt,

  Berechnungsmittel (15c), die ein zweites digitales Signal (CO), genannt Amplitudensignal, erzeugen können, welches ein Multibit-Signal mit einer begrenzten Bitanzahl ist, das die Amplitude dieser Veränderung quantifiziert; und

- in der Einheit zur räumlichen Bearbeitung (11), deren Eingänge von der Bearbeitungseinheit die digitalen Signale, das Binärsignal und das Amplitudensignal empfangen, die für die Pixel ein und desselben Rasters aufeinanderfolgen,

  Mittel, um in der Matrix (21) und während der Dauer eines Rasters das Binärsignal einerseits und das digitale Amplitudensignal andererseits zu verteilen,

  Mittel, um in dieser doppelten momentanen Matrixdarstellung des Binärsignals und des digitalen Amplitudensignals für dasselbe Pixel eine angepasste Zone zu bestimmen, in der sowohl das Binärsignal den gewünschten Wert aufweist, der dem Vorhandensein bzw. dem Fehlen einer signifikanten Veränderung entspricht, als auch das digitale Amplitudensignal sich um einen signifikanten Wert zwischen benachbarten Pixeln in der Matrix entlang einer Richtung, ausgehend von einem Ausgangspixel, verändert oder nicht, und zwar für ein und denselben Rasterabschnitt, somit zu ein und demselben Beobachtungszeitpunkt, und

  Mittel, um Signale zu erzeugen, die für das Vorhandensein und die Lokalisierung der eventuellen relativen Verschiebezone, für den Wert der relativen Zwischenrastergeschwindigkeit und die Ausrichtung unter mehreren möglichen Ausrichtungen in der Beobachtungsebene dieser eventuellen relativen Verschiebung in ihrem Umfeld, ausgehend von der momentanen Matrixverteilung dieser beiden Signale, des Binärsignals und des Amplitudensignals, repräsentativ sind.

**9.** Vorrichtung nach Anspruch 8, **dadurch gekennzeichnet, daß** die Einheit zur räumlichen Bearbeitung (17, 18) erste Verzögerungsmittel (r) in Kaskadenschaltung, von denen jedes eine Verzögerung gleich dem zeitlichen Abstand zwischen zwei aufeinanderfolgenden Zeilen erfordert, und zweite Verzögerungsmittel (d) in Kaskadenschaltung für jede Zeile umfasst, die jeweils eine Verzögerung gleich dem zeitlichen Abstand zwischen zwei aufeinanderfolgenden Pixeln einer Zeile erfordern, wobei die Ausgänge jedes dieser zweiten Verzögerungsmittel (d) und der Eingang der Kaskadenschaltung der zweiten Verzögerungsmittel (d) jeder Zeile zu einem gegebenen Zeitpunkt die Werte des Binärsignals und des digitalen Amplitudensignals zu ein und demselben Zeitpunkt zu den Erfassungsmitteln (17a) liefern.

**10.** Vorrichtung nach Anspruch 8 oder 9, **dadurch gekennzeichnet, daß** sie auch Mittel (24-29) umfasst, die die Histogramme der Ausgangswerte der räumlichen Bearbeitungseinheit sowie die Histogramme der Neigungen der beiden Achsen mit variablem Gefälle von Koordinaten in einer Ebene bilden, sowie Mittel, um in jedem Histogramm einen Bereich mit signifikanter Veränderung des bearbeiteten Wertes zu erfassen, um diesen Bereich an ihrem Ausgang zu genehmigen und für alle Histogramme Ausgangssignale abzuleiten, die eine Zone der beobachteten Szene in relativer Bewegung anzeigen und lokalisieren, falls eine solche vorhanden ist, sowie die Geschwindigkeit und die Ausrichtung dieser Bewegung, wenn sich die Zone tatsächlich in bezug auf ihre Umgebung verschiebt.

11. Vorrichtung nach Anspruch 8, 9 oder 10, **dadurch gekennzeichnet, daß** die Glättungsmittel (15c, 15d) einen Eingang umfassen, der das digitale Videosignal S (PI) aufnimmt, und für die aufeinanderfolgenden Pixel eines Rasters dieses Videosignals ein geglättetes Signal (LO) berechnen, in dem die zeitlichen Veränderungen des digitalen Videoeingangssignals durch Einsatz eines Schwellensignals (N), welches an einem anderen Eingang empfangen wird, und einer Zeitkonstante (CO) für jede Pixelposition eines Rasters verringert werden, deren Wert nacheinander verändert wird, damit die Glättung auch bei ihrer Verringerung die Neigung zur Veränderung des eingehenden digitalen Videosignals beibehält, wobei diese Glättungsmittel mit der Speichereinheit (16) zusammenwirken, die die aktualisierten Werte für jede Pixelposition eines Rasters, des geglätteten Signals und der Zeitkonstante empfängt, speichert und wiederherstellt, und an ihren Ausgängen für jede Pixelposition zumindest die Aufeinanderfolge der Werte der aktualisierten Zeitkonstante und der Werte eines Binärsignals über die Überschreitung oder Nicht-Überschreitung der Schwelle durch den Absolutwert des Unterschiedes zwischen dem Wert des Pixels und seinem geglätteten Wert liefern.

12. Vorrichtung nach einem der Ansprüche 8 bis 11, **dadurch gekennzeichnet, daß** die räumliche Bearbeitungseinheit (17, 18), die die Matrixverteilung pro Zeile und Spalte in verringerter Anzahl für die Ausgänge der Glättungsmittel durchführt, nämlich für die aufeinanderfolgenden Werte der Zeitkonstante (CO) und des Binärsignals, Erfassungsmittel (17a) umfaßt, um in der Matrixverteilung eine Pixelzone zu erfassen, in der gleichzeitig entweder der Wert des Binärsignals einer Schwellenüberschreitung entspricht und sich die Zeitkonstante zwischen benachbarten Pixeln eines signifikanten Wertes in einer Richtung verändert, und um Ausgangssignale zu erzeugen, die die Lokalisierung der Zone und die Geschwindigkeit und die Ausrichtung der Verschiebung in der Zone anzeigen, oder in der der Wert des Binärsignals einer Nicht-Überschreitung der Schwelle entspricht und sich die Zeitkonstante zwischen benachbarten Pixeln nicht ändert.

13. Verwendung der Vorrichtung nach Anspruch 10, 11 oder 12, um die Lenkung eines Landfahrzeugs auf einer Straße oder eines Luftfahrzeugs in der Nähe einer Flughafenpiste zu unterstützen, **dadurch gekennzeichnet, daß** die Vorrichtung ferner Mittel zur Darstellung der rechten Ränder Bd und linken Ränder Bg der Straße bzw. der Piste und Mittel umfasst, um mindestens eine der Achsen mit variablem Gefälle von Koordinaten auszurichten, damit sie im wesentlichen orthogonal zum entsprechenden Rand bleibt (Position Po).

14. Verwendung der Vorrichtung nach einem der Ansprüche 8 bis 12, um den Aufmerksamkeitszustand des Fahrers eines Kraftfahrzeugs zu überwachen, um eine eventuelle Neigung zur Schläfrigkeit desselben festzustellen, wobei die Vorrichtung

- ein digitales Videosignal erzeugt, welches darstellt:

   zu Beginn die aufeinanderfolgenden Bilder des Gesichts des Fahrers und sodann kontinuierlich und im Echtzeitmodus die aufeinanderfolgenden Bilder nur der Augen des Fahrers,

- das Videosignal, das sich nur auf die Augen des Führers bezieht, bearbeitet, um nacheinander und im Echtzeitmodus

   in den Bildern nur der Augen die Vertikalbewegungen der Augenlider, die das Zwinkern derselben darstellen, zu erfassen,

   die aufeinanderfolgenden Häufigkeiten dieser Bewegungen zu bestimmen, und

   die Häufigkeiten zu erfassen, die geringer als eine Schwelle für das Zwinkern der Augenlider sind, was einem Übergang zwischen dem Wachzustand und dem Schläfrigkeitszustand des Fahrers entspricht, und

- ein Warnsignal auslöst, das den Fahrer warnt, wenn diese Häufigkeiten die Schwelle überschreiten.

**Claims**

1. A method, operating in real time, for identifying and localising an area in relative movement in a scene observed by an observation system with an output constituted by a digital video signal comprising, conventionally, a succession of corresponding frames of the same nature, each composed of a succession of lines, each made of a succession of pixels, as well as for determining the speed and the oriented direction of the relative displacement movement, whereas the said method consists in performing on the said digital video signal successively

- a temporal processing that consists, for each pixel position, in determining the difference between the amplitude of the pixel signal in the current frame and the amplitude of a pixel signal representative of its values in the previous frames, and

- a spatial processing that consists, for each frame of the said digital video signal, in distributing over a matrix with a smaller number of lines and a smaller number of columns than respectively the number of lines and the number of pixels per line in the said digital video signal, exclusively the values, at the same observation instant, for a fraction of the pixels of a given frame (a fraction scanned through the said matrix for the duration of a frame), of signals representative of the variations in the pixel values and in deriving, from the set of matrix representations relating to a given observation instant, i.e. a given frame of the said video or digital signal, the localisation of a possible area in relative movement and assessing the said movement if any,

and **characterised in that**

- it comprises a double preliminary processing consisting of

  • adaptative smoothing of the said digital video signal while implementing a digital time constant whose digital value for each of the pixels of the said digital video signal and independently for each of them, is modified in response to the temporal variation or non-variation of the pixel value, and

  • storing a whole frame of the said output signal after smoothing, on the one hand, and the said time constant for each pixel position in the said frame, on the other hand;

- the said temporal processing consists, for each pixel position, in determining the existence, on the one hand, and the amplitude, on the other hand, of a possible significant variation in amplitude of the pixel signal between the current frame and the frame smoothed and stored just previously, and in generating two digital signals, whereas the first is a binary signal, hence monobit, with two possible values, the first of which represents the existence of such a significant variation and the second the absence of such a significant variation between both said frames, the current and the one smoothed just previously, whereas the value of the said binary signal modifies the stored value of the said time constant for the pixel in question in order respectively to reduce the said time constant if the said binary signal has the said first value and to increase the time constant if the said binary signal has the second value, whereby the decrease or increase in value is quantified, while the second so-called amplitude, digital signal is a multibit signal, with a limited number of bits, quantifying the amplitude of this variation; and

- the said spatial processing consists, for each frame of the said output video signal,

  • in distributing within the said matrix and throughout the duration of a frame, the said binary signal, on the one hand, and the said amplitude digital signal, on the other hand,

  • in determining, in this double instantaneous matrix representation of the said binary signal and of the said amplitude digital signal for the same pixel, a particularised area in which at the same time the said binary signal has the requested value representing the presence, or respectively the absence, of any significant variation and the said amplitude digital signal varies, or respectively does not vary, by a significant value between neighbouring pixels in the said matrix along an oriented direction from a starting pixel and this for the same portion of frame, hence at the same instant of observation, and

  • in generating signals representative of the existence and of the localisation of the area of possible relative displacement, of the value of the relative inter-frame velocity and of the oriented direction among several possible oriented directions in the observation plane, of this possible relative displacement, in its environment, from the said instantaneous matrix distribution of both these signals, binary and amplitude signals.

2. Method according to claim 1 **characterized in that** it also consists of:

  • forming, on the one hand, histograms of the signal values distributed in matrices, and, on the other hand, histograms of the inclination values of two coordinate axes, with variable slope, in a plane,

  • identifying a domain in which there is a significant variation of the processed values in each histogram formed, and

- for each identified domain, deducing whether or not there is an area in relative movement, and if so its localization, speed and oriented direction.

3. Method according to claim 1 or 2, **characterized in that** said matrix is a square matrix with the same odd number of lines and columns (2*l* + 1), and nested matrices containing 3 x 3, 5 x 5, 7 x 7, ... (2*l* + 1) x (2*l* + 1), members, centered on the center of this square matrix, are considered in order to determine the smallest nested matrix in which said digital signal varies along an oriented direction starting from said center, the value of said binary signal showing that the threshold along this direction has been exceeded.

4. Method according to claim 1 or 2, **characterized in that** said matrix is a hexagonal matrix, and nested hexagonal matrices of increasing size, centered on the center of this hexagonal matrix, are considered, in order to determine the smallest nested matrix in which said digital signal varies along an oriented direction from the top, the value of said bimary signal indicating that a threshold is exceeding according to said direction.

5. Method according to claim 1 or 2, **characterized in that** said matrix is an inverted L matrix with a single line and a single column, and nested matrices containing 3 x 3 pixels, 5 x 5 pixels, 7 x 7 pixels,.... (2*l* + 1) x (2*l* + 1) pixels are considered for the single line and the single column, in order to determine the smallest matrix in which the signal varies along an oriented direction, namely the line with the steepest slope with constant quantification.

6. Method according to any one of the previous claims, **characterized in that** said time constant is of the form $2^p$, where *p* is a number less than 16, and which can then be expressed in not more than 4 bits, the time constant being reduced or increased by subtracting or adding one unit to *p*.

7. Method according to claim 6, **characterized in that** successive decreasing portions of complete frames are considered using the Mallat time-scale algorithm and the largest of these portions, which gives displacement, speed and orientation indications compatible with the value of *p*, is selected.

8. A device operating in real time, for identifying and localising an area in relative movement in a scene observed, as well as for determining the speed and the oriented direction of the relative displacement movement, by implementing the method according to claim 1 comprising

- an observation system with an output constituted by a digital video signal consisting of, conventionally, a succession of corresponding frames of the same nature, each composed of a succession of lines, each made of a succession of pixels
- a temporal processing assembly that determines, for each pixel position, the difference between the amplitude of the pixel signal in the current frame and the amplitude of a pixel signal representative of its values in the previous frames,
- a spatial processing assembly that, for each frame of the said digital video signal, distributes over a matrix with a smaller number of lines and a smaller number of columns than respectively the number of lines and the number of pixels per line in the said digital video signal, exclusively the values, at the same observation instant, for a fraction of the pixels of a given frame (a fraction scanned through the said matrix for the duration of a frame), of signals representative of the variations in the pixel values and derives, from the set of matrix representations relating to a given observation instant, i.e. a given frame of the said video or digital signal, the localisation of a possible area in relative movement and assessing the said movement if any,

and **characterised in that** it comprises in combination

- means for adaptive smoothing (15) of the said digital video signal while implementing a digital time constant (CO) whose digital value for each of the pixels of the said digital video signal and independently for each of them, is modified in response to the temporal variation or non-variation of the pixel value, and
- means for storing (16) a whole frame of the said output signal after smoothing (LI), on the one hand, and the said time constant for each pixel position in the said frame, on the other hand;
- in the said temporal processing assembly (15)

  - comparison means (15) for determining the existence, on the one hand, and the amplitude, on the other hand, of a possible significant variation in amplitude of the pixel signal between the current frame and the frame smoothed and stored just previously, and for generating a first digital signal (DP); which is a binary signal, hence monobit, with two possible values, the first of which represents the existence of such a significant variation and the second the absence of such a significant variation between both said frames, the current and the one smoothed just previously, whereas the value of the said binary signal modifies the stored value of the said time constant for the pixel in question in order respectively to reduce the said time constant if the said binary signal has the said first value and to increase the time constant if the said binary signal has the second value, whereby the decrease or increase in value is quantified, and

- calculation means (15c) capable of generating a second so-called amplitude, digital signal (CO), which is a multibit signal, with a limited number of bits, quantifying the amplitude of this variation; and

- in the spatial processing assembly (11), whose inputs receive from the said processing unit the said successive binary and amplitude digital signals for the pixels of the same frame:

  - means for distributing within the said matrix (21) and throughout the duration of a frame, the said binary signal, on the one hand, and the said amplitude digital signal, on the other hand,
  - means for determining, in this double instant matrix representation of the said binary signal and of the said amplitude digital signal for the same pixel, a particularised area, in which at the same instant the said binary signal has the requested value representing the presence, or respectively the absence, of significant variation and the said amplitude digital signal varies, or respectively does not vary, by a significant value between neighbouring pixels in the said matrix along an oriented direction from a starting pixel and this for the same portion of frame, hence at the same instant of observation, and
  - means for generating signals representative of the existence and of the localisation of the area of possible relative displacement, of the value of the relative interframe speed and of the oriented direction among several possible oriented directions in the observation plane, of this possible relative displacement, in its environment, from the said instantaneous matrix distribution of both these signals, binary and amplitude signals.

9. Device according to claim 8, **characterized in that** said spatial processing unit (17, 18) comprises first delay means (r) in cascade, each of which imposes a delay equal to the time difference between two successive lines and second delay means (d) in cascade, for each line, each imposing a delay equal to the time difference between two successive pixels in a line, the outputs from each said second delay means (d) and the input to the cascade of said second delay means (d) on each line delivering at a given instant the values of said binary signal and said digital amplitude signal at the same instant, to said identification means (17a).

10. Device according to claim 8 or 9, **characterized in that** it also comprises means (24-29) for forming histograms of the output values from said spatial processing unit, and histograms of the inclinations of two, variable slope, coordinates axes within a plane, means for identifying a domain, in each histogram, in which there is a significant variation in the processed value, in order to validate this domain at the output, and to deduce, for all histograms, output signals that identify and localize an area of relative movement in the observed scene, if any, and the speed and oriented direction of this movement if said area is effectively moving with respect to its environment.

11. Device according to claim 8, 9 or 10, **characterized in that** said smoothing means (15c, 15d) comprise an input receiving said digital video signal S(PI) and derive, for each successive pixel in a frame of said video signal, a smoothed signal (LO) in which the temporal variations of the input digital video signal are reduced by using a threshold signal (N) received on another input and a time constant (CO) related to each pixel position in a frame, the value of which is modified successively so that the smoothing maintains, although reduced, the trend in the variations of the incoming digital video signal, said smoothing means working in cooperation with the memory unit (16) that receives, stores and retrieves the updated values of the smoothed signal and said time constant, for each position of pixel in a frame, and output, for each pixel position, at least the succession of values of the updated time constant and of the values of the binary signal that shows whether or not said threshold is exceeded by the absolute value of the difference between the value of the pixel and its smoothed value.

12. Device according to any one of claims 8 to 11, **characterized in that** said spatial processing unit (17, 18) that performs the matrix distribution, into a reduced number of lines and columns, of the outputs from said smoothing means, namely the successive values of the time constant (CO) and said binary signal, comprises identification means (17a) to identify in said matrix distribution, an area of pixels in which simultaneously either the value of said binary signal corresponds to a threshold being exceeded and said time constant varies between adjacent pixels by a significant value in one direction and for producing output signals indicating the localization of said area and the speed and oriented direction of displacement in this area, or the value of said binary signal corresponds to a threshold not being exceeded and said time constant does not vary between adjacent pixels.

13. Application of the device according to claim 10, 11 or 12 to assist in driving a land vehicle on a road, or in flying an aircraft close to an airport runway, **characterized in that** the device also comprises means for representing the right and left sides B*d* and B*g* of the road or respectively the runway, and means for orienting at least one of the coordinate axes at variable slope, so that it remains approximately orthogonal to the corresponding side (position $P_0$).

14. Application of the device according to any one of claims 8 to 12 for monitoring the vigilance state of the driver of a motor vehicle, for detecting a possible tendency sleepiness thereof, consisting in :

    (a) producing a video signal representing

    -    initially the successive images of the face of the driver and then
    -    continuously, in real time, the successive images of the eyes of the driver only,

    (b) processing said video signal relative only to said eyes for successively, in real time,

    -    detecting in said image of the eyes, the vertical movements of the eyelids representing the blinkings thereof,
    -    determining the rates of these movements and
    -    detecting the rates which are lower than a threshold blinking rate corresponding substantially to the transition between the awake state and the sleepiness state of said driver, and

    (c) starting a warning signal alerting the driver as soon as said threshold blinking rate is crossed.

**FIG. 1**

**FIG. 2**

**FIG. 3**

FIG. 4

FIG. 5

FIG. 6

FIG. 7

M 9

+1

0

0

+1

0

M 3

-1

0

0

-1

y_a    x_a

MR0

MR1    MR2

FIG. 8

**FIG. 9**

**FIG. 10**

FIG. 11

**FIG. 12**

**FIG. 13**

**FIG. 14**

**FIG. 15**

**FIG. 16**

(a)   (b)   (c)

**FIG. 17**

**FIG. 18**

**FIG. 19**

**FIG.20**

**FIG.21**

**FIG.22**